# EUROPÄISCHE PATENTSCHRIFT

(11) **EP 3 274 148 B1**
(45) Veröffentlichungstag und Bekanntmachung des Hinweises auf die Patenterteilung: **30.01.2019**
(21) Anmeldenummer: 16720987.3
(22) Anmeldetag: 23.03.2016
(51) Int. Cl.: B29B 7/40, B29B 7/42, B29B 7/72, B29B 7/74, B29C 47/56, C08G 63/78, C08G 64/02, C08G 69/04, B29B 7/84, B29B 7/86

(54) **ANLAGE SOWIE VERFAHREN ZUR BEHANDLUNG EINER KUNSTSTOFFSCHMELZE**
INSTALLATION AND METHOD FOR TREATING A PLASTIC MELT
INSTALLATION ET PROCÉDÉ DE TRAITEMENT D'UNE MATIÈRE PLASTIQUE FONDUE

(30) Priorität: 23.03.2015 AT 502322015; 23.03.2015 AT 502332015
(43) Veröffentlichungstag der Anmeldung: 31.01.2018
(60) Teilanmeldung: 18167105.8
(73) Patentinhaber: Next Generation Recyclingmaschinen GmbH, 4101 Feldkirchen an der Donau (AT)
(72) Erfinder: BEHOUN, Helmut, 4300 St. Valentin (AT); BRZEZOWSKY, Klaus, 4614 Marchtrenk (AT); HEHENBERGER, David, 4170 Haslach an der Mühl (AT); PICHLER, Bernhard, 4171 St. Peter am Wimberg (AT); PICHLER, Thomas, 4171 St. Peter am Wimberg (AT)
(74) Vertreter: Burger, Hannes
(86) Internationale Anmeldenummer: PCT/AT2016/050074
(87) Internationale Veröffentlichungsnummer: WO 2016/149725

(56) Entgegenhaltungen:
- EP-A1- 1 491 569
- EP-B1- 1 833 597
- WO-A1-2007/131728
- WO-A1-2014/040099
- DE-A1- 2 450 030
- JP-A- 2002 254 432
- JP-A- 2011 131 381
- US-A- 3 410 938
- US-A- 6 103 152
- US-B2- 7 807 728

## Beschreibung

Die Erfindung betrifft eine Anlage sowie ein Verfahren zur Behandlung einer Kunststoffschmelze, insbesondere einer Polykondensatschmelze, und Einstellung von deren intrinsischen Viskosität.

Die WO 2014/040099 A1 der gleichen Anmelderin beschreibt ein Verfahren sowie eine Vorrichtung zum Erhöhen der Grenzviskosität einer Polykondensatschmelze unter Unterdruck. Die Schmelze tritt durch eine Lochplatte oder ein Sieb mit mehreren Öffnungen in eine Kammer ein, in der ein Druck kleiner 20 mbar herrscht und passiert diese Kammer im freien Fall in dünnen Fäden und verweilt unterhalb der Kammer für wenigstens eine Minute in einem Sammelbehälter. Im Sammelbehälter wird die Schmelze von einem in horizontaler Lage in Bezug auf einen Boden des Sammelbehälters ausgerichteten Misch- und Austragsteil unter Vakuum ständig bewegt, wobei das Misch und Austrageteil nicht vollständig von der Schmelze bedeckt wird. Oberhalb der Schmelze verbleibt ein freier Raum, wobei die Oberfläche der Schmelze durch eine Drehbewegung des Misch- und Austragsteils immer wieder aufgerissen und mehrmalig erneuert wird. Durch das Verweilen und in Bewegung halten der Schmelze wird die bei den dünnen Fäden begonnene Polykondensation im Schmelzebad fortgesetzt. Schließlich wird die Schmelze vom gemeinsam ausgebildeten Misch- und Austragsteil aus dem Sammelbehälter ausgetragen.

Die JP 2002/254432 A beschreibt einen Aufnahmetrichter zur Aufnahme von einem zu plastifizierenden Material, welches über eine mit einem Motor angetriebene Fördervorrichtung einer Plastifiziereinheit einer Spritzgussmaschine intermittierend zugefördert wird. Der Aufnahmetrichter mitsamt dem Motor und der Fördervorrichtung sind auf einer Wiegezelle abgestellt. Mittels der Wiegezelle kann das Gewicht des im Aufnahmetrichter aufgenommenen Materials ermittelt werden und damit bestimmt werden, ob ausreichend Material für die Weiterförderung an die Plastifiziereinheit der Spritzgussmaschine zur Verfügung steht. Weiters kann das Gewicht der Abgabemenge an Material bestimmt werden, welches an die Plastifiziereinheit der Spritzgussmaschine weiter gefördert wird. Dies ist jedoch nur möglich, solange während des Weiterförderns kein neues Material in den Aufnahmetrichter zugefördert wird. Durch Abstimmung des Gewichts der Zufuhrmenge an Material in den Aufnahmetrichter an das Gewicht der intermittierend abgegebenen Abfuhrmenge kann so ein in einer vorbestimmten Zeitdauer kontinuierlicher Materialdurchsatz ermittelt und festgelegt werden, welcher der nachfolgenden Spritzgusseinheit zugefördert wird. Nachteilig dabei ist, dass keine direkte Mengen- bzw. Massenkontrolle vom zugeführten Rohmaterial bis hin zu der vom Extruder abgegebenen Schmelze möglich ist.

Aus der JP 2011-131381 A ist eine ähnlich ausgebildete Anlage bekannt geworden, welche einen ersten Fülltrichter und einen an den Ausgabeabschnitt unterhalb angeordneten zweiten Fülltrichter umfasst. Der Ausgabeabschnitt des zweiten Fülltrichters mündet in einen Förderer ein. Der zweite Fülltrichter sowie der unterhalb angeordnete Förderer sind gemeinsam auf einer Wiegevorrichtung abgestützt. Damit kann eine Änderung des Gewichts des dem zweiten Fülltrichter zugeführten und abgeführten Rohmaterials ermittelt werden. Vom Förderer wird das Rohmaterial einem nachfolgend angeordneten Extruder zugeführt. Auch hier ist wiederum nachteilig, dass keine direkte Mengen- bzw. Massenkontrolle vom zugeführten Rohmaterial bis hin zu der vom Extruder abgegebenen Schmelze möglich ist.

Aus der EP 1 302 501 A2 ist ein Verfahren sowie eine Vorrichtung zum Fördern der Nachpolykondensation von Polymeren Produkten bekannt geworden. Die zuvor aufbereitete Schmelze wird durch eine Extrusionsplatte mit einer Vielzahl von Löchern hindurchgefördert, um der Schmelze eine Fadenform während des Hindurchtretens in vertikaler Richtung innerhalb einer Vakuumkammer zu geben. Unterhalb der Kammer ist ein Sammelbehälter angeordnet, in welchem aus den einzelnen Schmelzefäden ein Schmelzebad gebildet wird. Aus diesem Schmelzebad wird eine Teilmenge entnommen und der Zuleitung des aufgeschmolzenen Rohprodukts als bereits behandelte Schmelze in einem bestimmten Mengenverhältnis zugeführt. Dieses Gemisch zur Bildung der Schmelze aus dem Rohprodukt sowie dem zusätzlich zugeführten, bereits behandelten Schmelzeprodukt wird erneut durch die Extrusionsplatte mit einer Vielzahl von Löchern der Kammer mit dem reduzierten Druck zugeführt. Am unteren Ende des als Trichter ausgebildeten Sammelbehälters ist eine Ableitung hin zu einer Transferpumpe angeschlossen.

Die DE 2 243 024 A beschreibt eine Vorrichtung zur Herstellung von hochmolekularem PET. Die Vorrichtung besteht aus einem senkrecht angeordneten, zylinderförmigen Behälter mit einem Schmelzeeinlass an seinem oberen Ende und einem Schmelzeauslass am unteren Ende sowie Abzugsstutzen für flüchtige Stoffe. In der Mitte des Behälters ist eine Welle senkrecht angeordnet, um welche senkrechte, feststehende Stoffaustauschbleche angeordnet sind. Über den Stoffaustauschblechen ist jeweils ein Verteilerraum und unterhalb dieser ist ein Sammelraum vorhanden. Zwischen einem Verteilerraum und dem Sammelraum der darüber liegenden Stufe ist ein Verbindungsrohr angebracht, durch welches die Welle geführt ist. Die Welle ist an den durch das Verbindungsrohr ragenden Teilen jeweils als in den Verteilerraum fördernde Extruderwelle ausgebildet.

Die WO 2012/119165 A1 beschreibt sowohl ein Verfahren als auch eine Vorrichtung zum Entfernen von Verunreinigungen aus einer Kunststoffschmelze unter Unterdruck. Die Kunststoffschmelze wird dabei durch eine Lochplatte oder ein Sieb mit mehreren Öffnungen einer Kammer zugeführt, in der ein Druck kleiner 20 mbar herrscht. Die aus den Öffnungen austretende Schmelze bildet dabei dünne Fäden, die im freien Fall durch die Kammer hindurchtreten und unterhalb der Kammer in einem Sammelbehälter, welcher als Sammeltrichter ausgebildet ist, gesammelt wird und solange verweilt, bis dass die Schmelze an einem unteren Ende des Sammeltrichters durch eine Auslassöffnung aus dem Sammeltrichter abfließt bzw. entnommen wird. Erst an diese Auslassöffhung schließt eine Schmelzepumpe oder eine Förderschnecke an, mit der die Kunststoffschmelze zu einer Verbindungsleitung oder einer Sammelleitung gepumpt werden kann.

Der vorliegenden Erfindung liegt die Aufgabe zugrunde, konstante Behandlungsbedingungen im laufenden Behandlungsprozess für die Kunststoffschmelze zu schaffen, um eine gleichmäßige Werkstoffqualität der behandelten Kunststoffschmelze zu erhalten.

Diese Aufgabe der Erfindung wird mit einer Anlage gemäss Anspruch 1 zur Behandlung einer Kunststoffschmelze, insbesondere einer Polykondensatschmelze, und Einstellung von deren intrinsischen Viskosität mit einem Reaktor, der ein Reaktorgehäuse mit zumindest einem ersten Reaktorgehäuseteil mit einem oberen Endbereich und einem unteren Endbereich und einen sich zwischen dem oberen und unteren Endbereich erstreckenden ersten Kammerteil aufweist, wobei der erste Kammerteil eine vertikale Höhenerstreckung aufweist, und das Reaktorgehäuse im Bereich des unteren Endbereichs des mindestens ersten Reaktorgehäuseteils ein unmittelbar daran anschließendes, zumindest zweites Reaktorgehäuseteil mit einem zweiten Kammerteil aufweist, wobei die beiden Kammerteile miteinander in Strömungsverbindung stehen und gegenüber der äußeren Umgebung abgedichtet ausgebildet sind, und im Bereich des oberen Endbereichs des ersten Reaktorgehäuseteils an zumindest einer Einlassöffnung zumindest eine Zufuhrleitung für die Kunststoffschmelze in den ersten Reaktorgehäuseteil einmündet und im zweiten Reaktorgehäuseteil zumindest eine Auslassöffnung für die Kunststoffschmelze angeordnet ist, und mit zumindest einem im zweiten Reaktorgehäuseteil angeordneten Mischelement, welches Mischelement im zweiten Reaktorgehäuseteil um eine Rotationsachse drehbar gelagert ist, und wobei das Mischelement mit einer eigenen, unabhängigen ersten Antriebsvorrichtung in Antriebsverbindung steht, dadurch gelöst,
- dass der Reaktor unter Zwischenschaltung zumindest einer ersten Gewichtsermittlungsvorrichtung an einer Aufstandsfläche abgestützt ist,
- dass anschließend an die Auslassöffnung des zweiten Reaktorgehäuseteils eine als Schmelzepumpe oder als Extruder ausgebildete Austragsvorrichtung für die Kunststoffschmelze angeordnet ist,
- dass auch die Austragsvorrichtung unter Zwischenschaltung zumindest einer eigenen zweiten Gewichtsermittlungsvorrichtung an der Aufstandsfläche abgestützt ist, und
- dass die Austragsvorrichtung mit einer zweiten Antriebsvorrichtung in Antriebsverbindung steht, wobei die zweite Antriebsvorrichtung unabhängig von der ersten Antriebsvorrichtung des Mischelements angetrieben ist.

Der dadurch erzielte Vorteil liegt darin, dass so der Mengen- bzw. Gewichtshaushalt der Kunststoffschmelze während des laufenden Betriebs der Anlage in gewissen vorgegebenen Grenzen konstant gehalten wird. Weiters wird damit aber auch die Qualität der Kunststoffschmelze und damit verbunden die intrinsische Viskosität in Abhängigkeit von der Entnahmemenge bzw. dem Entnahmegewicht eingestellt und relativ konstant beibehalten. So wird durch die laufende Überwachung des Gewichts stets ein ausgeglichenes Gleichgewicht an entnommenem Gewicht im Verhältnis zum zuzuführenden Gewicht an Kunststoffschmelze eingestellt. Damit wird aber auch das Niveau des Schmelzespiegels relativ konstant eingehalten, wodurch stets ein ausreichender Freiraum oberhalb des Schmelzespiegels verbleibt, und so die weitere Behandlung der Schmelze durch das Mischelement ungehindert auf die Schmelze einwirkt. Durch das Vorsehen einer eigenen Austragsvorrichtung erfolgt so unabhängig vom Mischelement die Entnahme der behandelten Schmelze. Durch diese Trennung werden die Intensität sowie die Dauer des Mischvorgangs unabhängig von der Entnahme so lange durchgeführt, bis die vorbestimmten Werte der zu behandelnden Schmelze erreicht worden sind. Durch die eigene Abstützung wird so aber auch jener Gewichtsanteil an Schmelze ermittelt, welcher sich noch im Bereich der Anlage befindet. Damit wird so ein noch besser abgestimmtes Behandlungsergebnis für die Schmelze erzielt.

Da das Mischelement mit einer eigenen, unabhängigen ersten Antriebsvorrichtung in Antriebsverbindung steht, wird so ein von der Austragsmenge unabhängiger Mischvorgang zur Erzielung der gewünschten intrinsischen Viskosität ermöglicht. Durch die Trennung des Antriebs von Mischelement und Austragsvorrichtung werden die Intensität sowie die Dauer des Mischvorgangs so lange durchgeführt, bis erst die Entnahme der Schmelze durchgeführt werden muss.

Bei dieser Anlage steht die Austragsvorrichtung mit einer zweiten Antriebsvorrichtung in Antriebsverbindung, und die zweite Antriebsvorrichtung ist unabhängig von der ersten Antriebsvorrichtung des Mischelements angetrieben. Damit werden die Entnahmemenge bzw. das Entnahmegewicht an Schmelze aus dem Reaktor unabhängig vom durchzuführenden Misch- und Behandlungsvorgang festgelegt.

Weiters ist es vorteilhaft, wenn die Anlage weiters zumindest ein Traggerüst umfasst und zumindest der Reaktor, insbesondere dessen Reaktorgehäuse, an dem zumindest einen Traggerüst gehalten ist. Dadurch kann eine gerichtete Abstützung und weiters exakt vordefinierte Abstützpunkte geschaffen werden.

Eine andere Ausführungsform zeichnet sich dadurch aus, dass das Traggerüst mitsamt dem daran gehaltenen Reaktor über mehrere der Gewichtsermittlungsvorrichtungen an der Aufstandsfläche abgestützt ist. So kann eine exakte Ermittlung des Gesamtgewichts erzielt werden.

Eine weitere Ausbildung sieht vor, dass die zumindest eine Gewichtsermittlungsvorrichtung an ihrer vom Reaktor oder vom Traggerüst abgewendeten und der Aufstandsfläche zugewendeten Seite an einem Grundrahmen abgestützt ist und der Grundrahmen über Räder an der Aufstandsfläche abgestützt ist. Damit kann einfach der Aufstellungsort des Reaktors verlagert werden. Darüber hinaus kann so aber auch eine individuelle Ausrichtung des Reaktors samt Traggerüst zu anderen Anlagenkomponenten erfolgen.

Eine andere Ausführungsform zeichnet sich dadurch aus, dass zumindest der Reaktor, insbesondere dessen Reaktorgehäuse, am Traggerüst über die zumindest eine Gewichtsermittlungsvorrichtung in einer hängenden Position am Traggerüst gehalten ist. So kann ebenfalls eine Gewichtsermittlung in allen Betriebszuständen einfach und sicher durchgeführt werden. Weiters können damit aber mögliche Schwingungen oder andere Störeinflüsse besser abgefangen und kompensiert werden.

Eine weitere bevorzugte Ausführungsform ist dadurch gekennzeichnet, dass die zumindest eine Gewichtsermittlungsvorrichtung durch eine Wiegezelle oder eine Zugwaage gebildet ist, wobei die zumindest eine Gewichtsermittlungsvorrichtung mit einer Steuervorrichtung in Kommunikationsverbindung steht. Damit kann ein gesteuerter und/oder geregelter Behandlungsvorgang erzielt werden, um so den einzustellenden iV-Wert der Schmelze exakter einhalten zu können.

Weiters ist es vorteilhaft, wenn der erste Reaktorgehäuseteil und/oder der zweite Reaktorgehäuseteil rohrförmig ausgebildet ist bzw. sind. So kann eine definierte Längserstreckung und eine damit verbundene Behandlungsstrecke für die Schmelze ausgebildet werden.

Eine weitere mögliche Ausführungsform hat die Merkmale, dass die Rotationsachse des Mischelements koaxial bezüglich des rohrförmig ausgebildeten zweiten Reaktorgehäuseteils angeordnet ist. Damit kann insbesondere bei Rohren bzw. Rohrstücken mit einem kreisrunden Innenquerschnitt in Abhängigkeit von der äußeren Querschnittsabmessung des Mischelements eine zu starke Anlagerung von Schmelze verhindert werden.

Eine weitere Ausbildung sieht vor, dass das Mischelement in einem Minimalabstand von kleiner 1,0 mm von einer Innenwand des zweiten Reaktorgehäuseteils angeordnet ist. Damit kann nicht nur eine gute und ausreichende Mischwirkung sondern auch noch ein gewisser Abstreifeffekt an der Behälterinnenwand erzielt werden.

Weiters ist es vorteilhaft, wenn das Mischelement in einem Minimalabstand von größer 1,0 mm, insbesondere größer 20 mm, von der Innenwand des zweiten Reaktorgehäuseteils angeordnet ist. Durch die Vergrößerung des Spaltabstandes kann so ein gewisser Rückfluss an Schmelze während des Misch- und Behandlungsvorganges ermöglicht werden, wodurch eine noch bessere Behandlungswirkung durch die innere Umwälzung der Schmelze erreicht werden kann.

Eine weitere mögliche Ausführungsform hat die Merkmale, dass beide miteinander in Strömungsverbindung stehenden Kammerteile der beiden Reaktorgehäuseteile über zumindest eine Anschlussöffnung und zumindest eine Absaugleitung mit einem Unterdruckerzeuger in Strömungsverbindung stehen. Damit können die aus dem laufenden Behandlungsvorgang entstehenden bzw. abzuleitenden und nicht zur Schmelze gehörenden Bestandteile aus dem Reaktorinnenraum abgeführt werden. Weiters kann damit aber auch der Polykondensationsvorgang innerhalb der Schmelze begonnen und weiter fortgesetzt werden.

Ist die zumindest eine Absaugleitung zumindest bereichsweise mit einem Heizelement versehen, kann so innerhalb der Absaugleitungen ein Kondensieren von Bestandteilen, insbesondere von Wasser oder anderen abzuführenden Stoffen, verhindert werden.

Eine andere Ausführungsform zeichnet sich dadurch aus, dass die zumindest eine Auslassöffnung für die Kunststoffschmelze im Bereich des vom ersten Reaktorgehäuseteil distanziert angeordneten zweiten Endbereichs des zweiten Reaktorgehäuseteils sowie in einem Bodenbereich desselben angeordnet ist. Damit kann ein gerichteter Entnahmebereich für die Schmelze aus dem Reaktorgehäuseteil geschaffen werden.

Die Aufgabe der Erfindung wird aber unabhängig davon auch durch ein Verfahren gemäss Anspruch 12 zur Behandlung einer Kunststoffschmelze, insbesondere einer Polykondensatschmelze, und Einstellung von deren intrinsischen Viskosität dadurch gelöst,
- dass zuerst von zumindest einer ersten Gewichtsermittlungsvorrichtung vom Eigengewicht des Reaktors und von zumindest einer eigenen zweiten Gewichtsermittlungsvorrichtung vom Eigengewicht von einer anschließend an die im zweiten Reaktorgehäuseteil angeordneten Auslassöffnung angeordneten, als Schmelzepumpe oder als Extruder ausgebildeten Austragsvorrichtung ohne der Kunststoffschmelze jeweils ein erster Messwert ermittelt und an eine Steuervorrichtung übertragen und gegebenenfalls in dieser abgespeichert werden,
- dass anschließend die zu behandelnde Kunststoffschmelze dem Reaktor zugeführt und bei Erreichen eines Sollfüllstandes der Kunststoffschmelze und der damit verbundenen Höhe des Schmelzespiegels im zweiten Kammerteil des zweiten Reaktorgehäuseteils von der zumindest einen ersten und von der zumindest einen eigenen zweiten Gewichtsermittlungsvorrichtung jeweils zweite Messwerte ermittelt und an die Steuervorrichtung übertragen und gegebenenfalls in dieser abgespeichert werden,
- dass dann von der Steuervorrichtung ein Differenzwert aus den zweiten Messwerten abzüglich der ersten Messwerte ermittelt wird,
- dass von der Steuervorrichtung in Abhängigkeit des aus dem zweiten Reaktorgehäuseteils entnommenen Gewichts an behandelter Kunststoffschmelze das Gewicht an zugeführter, zu behandelnder Kunststoffschmelze in vorgegebenen Grenzen im Gleichgewicht bezüglich des zuvor ermittelten Differenzwertes gehalten wird,
- dass die anschließend an die im zweiten Reaktorgehäuseteil angeordnete Auslassöffnung angeordnete Austragsvorrichtung von einer zweiten Antriebsvorrichtung angetrieben wird, und
- dass die zweite Antriebsvorrichtung unabhängig von der ersten Antriebsvorrichtung des Mischelements angetrieben wird.

Die aus der Merkmalskombination dieses Anspruches erzielten Vorteile liegen darin, dass so der Mengen- bzw. Gewichtshaushalt der Kunststoffschmelze während des laufenden Betriebs der Anlage, insbesondere des Reaktors mitsamt der Austragsvorrichtung, in gewissen vorgegebenen Grenzen konstant gehalten wird. Durch die eigene Abstützung der Austragvorrichtung wird so aber auch jener Gewichtsanteil an Schmelze ermittelt, welcher sich noch im Bereich der Anlage befindet. Damit wird so ein noch besser abgestimmtes Behandlungsergebnis für die Schmelze erzielt. Weiters werden damit aber auch die Qualität der Kunststoffschmelze und damit verbunden die intrinsische Viskosität in Abhängigkeit von der Entnahmemenge bzw. dem Entnahmegewicht eingestellt und relativ konstant beibehalten. So wird durch die laufende Überwachung des Gewichts des Reaktors mitsamt der Austragvorrichtung stets ein ausgeglichenes Gleichgewicht an entnommenem Gewicht im Verhältnis zum zuzuführenden Gewicht an Kunststoffschmelze eingestellt. Damit wird aber auch das Niveau des Schmelzespiegels relativ konstant eingehalten, wodurch stets ein ausreichender Freiraum oberhalb des Schmelzespiegels verbleibt, und so die weitere Behandlung der Schmelze durch das Mischelement ungehindert auf die Schmelze einwirkt.

Da das Mischelement von einer eigenen, unabhängigen ersten Antriebsvorrichtung angetrieben wird, wird so ein von der Austragsmenge unabhängiger Mischvorgang zur Erzielung der gewünschten intrinsischen Viskosität ermöglicht. Durch die Trennung des Antriebs von Mischelement und Austragsvorrichtung werden die Intensität sowie die Dauer des Mischvorgangs so lange durchgeführt, bis erst die Entnahme der Schmelze durchgeführt werden kann.

Bei dieser Anlage wird die anschließend an die im zweiten Reaktorgehäuseteil angeordnete Auslassöffnung angeordnete Austragsvorrichtung von einer zweiten Antriebsvorrichtung angetrieben, wobei die zweite Antriebsvorrichtung unabhängig von der ersten Antriebsvorrichtung des Mischelements angetrieben wird. Damit werden die Entnahmemenge bzw. das Entnahmegewicht an Schmelze aus dem Reaktor unabhängig vom durchzuführenden Misch- und Behandlungsvorgang festgelegt.

Eine andere Vorgehensweise zeichnet sich dadurch aus, wenn die dem Reaktor zugeführte und zu behandelnde Kunststoffschmelze im ersten Reaktorgehäuseteil in eine Vielzahl von dünnen Schmelzefäden aufgeteilt wird und die dünnen Schmelzefäden den ersten Kammerteil im freien Fall passieren. Damit kann durch die fadenförmige Aufteilung der Schmelze ein noch besserer Behandlungsvorgang derselben erzielt werden. Damit können abzuführende Bestandteile noch besser an die Oberfläche gelangen und so aus dem Reaktor abgeleitet werden.

Vorteilhaft ist auch eine Verfahrensvariante, bei welcher die Kunststoffschmelze im zweiten Kammerteil des zweiten Reaktorgehäuseteils vom Mischelement ständig bewegt und durchmischt wird. Damit wird der im ersten Reaktorteil begonnene Behandlungsvorgang, insbesondere die Polykondensation, weiter fortgesetzt und so die intrinsische Viskosität weiter erhöht.

Eine weitere vorteilhafte Vorgehensweise ist dadurch gekennzeichnet, dass die von den beiden Reaktorgehäuseteilen umgrenzten Kammerteile auf einen Druck kleiner 100 mbar evakuiert werden. Damit kann ein noch besseres Behandlungsergebnis erzielt werden.

Vorteilhaft ist auch eine Verfahrensvariante, bei welcher der Schmelzespiegel des Schmelzebades im zweiten Kammerteil mit einer annähernd gleichen Längserstreckung wie das Mischelement ausgebildet wird und so auf den Schmelzespiegel des Schmelzebades während dessen Durchmischung der Druck kleiner 100 mbar einwirkt. Der dadurch erzielte Vorteil liegt darin, dass so innerhalb des zweiten Reaktorgehäuseteils die volle Länge für die Behandlung der Kunststoffschmelze durch das Mischelement zur Verfügung steht.

Weiters ist ein Vorgehen vorteilhaft, bei dem die Entnahme der behandelten Kunststoffschmelze aus dem zweiten Kammerteil in einem Winkel von 30°, bevorzugt von 90°, bezüglich einer Längsachse des zweiten Reaktorgehäuseteils unterhalb des Schmelzespiegels durchgeführt wird. So kann weiters verhindert werden, dass bei einem geringeren Füllstand sich der Schmelzespiegel in die Entnahmeöffnung hinein erstreckt und damit möglicherweise eine Unterbrechung der Entnahme von Kunststoffschmelze notwendig wird. Dies kann in weiterer Folge zu ungewollten Unterbrechungen des ansonsten kontinuierlichen Entnahmevorgangs führen.

Weiters ist ein Vorgehen vorteilhaft, bei dem von einer Messvorrichtung ein Messwert der intrinsischen Viskosität der behandelten Kunststoffschmelze im Bereich der Auslassöffnung oder einem unmittelbar daran anschließenden Austragsabschnitt der Kunststoffschmelze ermittelt wird. Damit kann im laufenden Behandlungsprozess stets eine unmittelbare Ermittlung der intrinsischen Viskosität erfolgen und so rasch auf den durchzuführenden Behandlungsvorgang eingewirkt werden, sodass kein oder nur eine geringe Menge Ausschussmaterial anfällt.

Eine weitere mögliche Ausführungsform hat die Merkmale, dass die zumindest eine Gewichtsermittlungsvorrichtung bodennah bezüglich der Aufstandsfläche angeordnet ist.

Eine andere Ausführungsform zeichnet sich dadurch aus, dass der zweite Reaktorgehäuseteil eine in etwa horizontal verlaufend ausgerichtete Längserstreckung mit voneinander distanzierten ersten und zweiten Endbereichen aufweist. Damit kann ein sich über die gesamte Längserstreckung des zweiten Reaktorgehäuseteils erstreckender Behandlungsraum geschaffen werden, um so eine optimale Behandlung der Schmelze erzielen zu können.

Eine andere Ausführungsform zeichnet sich dadurch aus, dass sich das Mischelement über die Längserstreckung des zweiten Kammerteils zwischen den voneinander distanziert angeordneten ersten und zweiten Endbereichen des zweiten Reaktorgehäuseteils erstreckt und vollständig im zweiten Kammerteil angeordnet ist. Der dadurch erzielte Vorteil liegt darin, dass so innerhalb des zweiten Reaktorgehäuseteils die volle Länge für die Behandlung der Kunststoffschmelze durch das Mischelement zur Verfügung steht.

Weiters ist ein Vorgehen vorteilhaft, bei dem der Schmelzespiegel der Kunststoffschmelze beim vordefinierten Sollfüllstand im zweiten Kammerteil des zweiten Reaktorgehäuseteils in etwa in halber Höhe des zweiten Kammerteils liegt. Dadurch können in dem oberhalb des Schmelzespiegels verbleibenden Freiraum ein Aufreißen des Schmelzespiegels sowie dessen ständige Erneuerung erfolgen. Bei einem im Reaktorinnenraum herrschenden Unterdruck kann so aber auch dieser voll zur Wirkung auf die Schmelze gebracht werden.

Zum besseren Verständnis der Erfindung wird diese anhand der nachfolgenden Figuren näher erläutert.

Es zeigen jeweils in stark vereinfachter, schematischer Darstellung:
Fig. 1 einen Teil einer erfindungsgemässen Anlage mit einem Reaktor zur Behandlung der Kunststoffschmelze, im Schnitt;
Fig. 2 einen Teil des Reaktorgehäuses im Querschnitt, gemäß den Linien II-II in Fig. 1;
Fig. 3 eine mögliche andere Anordnung der Abstützung des Reaktors an der Aufstandsfläche;
Fig. 4 eine weitere mögliche Ausführungsvariante eines Reaktors mit einer Mehrfachanordnung von Reaktorgehäuseteilen, in Ansicht.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

Der Begriff "insbesondere" wird nachfolgend so verstanden, dass es sich dabei um eine mögliche speziellere Ausbildung oder nähere Spezifizierung eines Gegenstands oder eines Verfahrensschritts handeln kann, aber nicht unbedingt eine zwingende, bevorzugte Ausführungsform desselben oder eine Vorgehensweise darstellen muss.

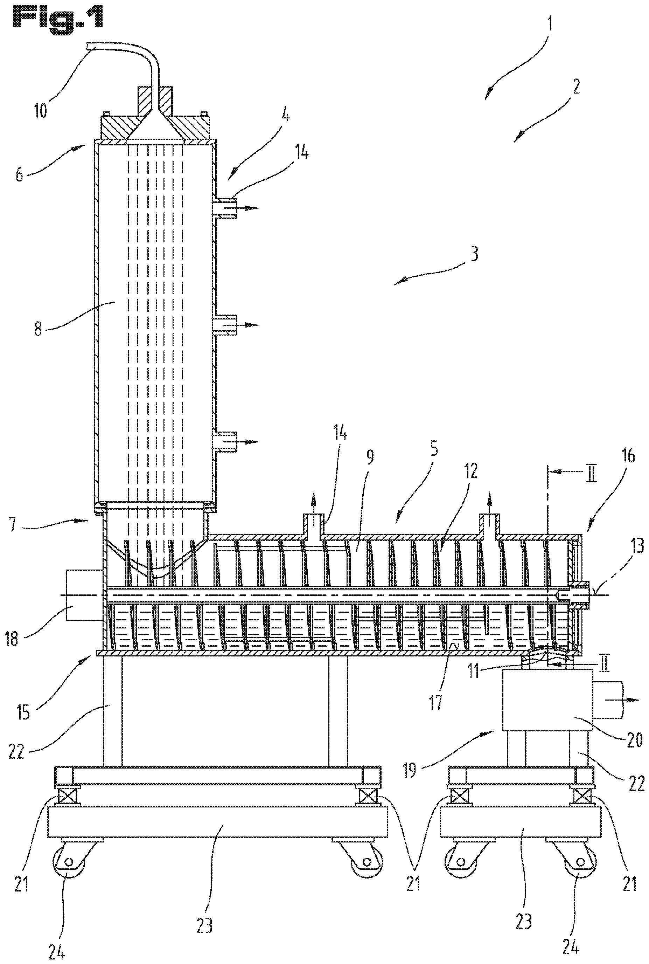

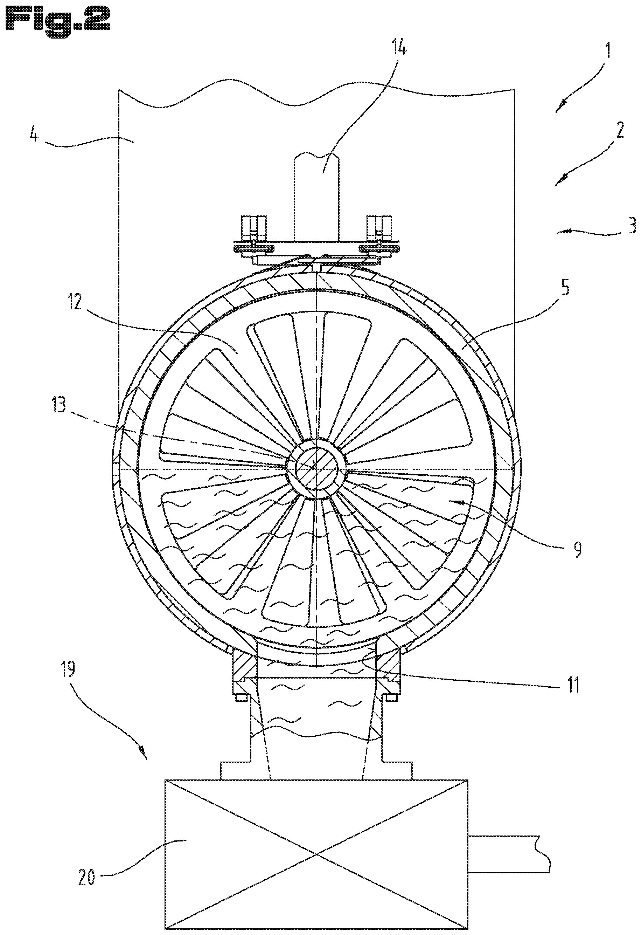

In den Fig. 1 bis 3 ist vereinfacht ein Teil einer Anlage 1 zur Behandlung einer Kunststoffschmelze, insbesondere einer Polykondensatschmelze, gezeigt. Unter Behandlung wird insbesondere die Einstellung von deren intrinsischen Viskosität bzw. deren Grenzviskosität verstanden. Zumeist bzw. bevorzugt wird die Kunststoffschmelze entweder aus Neuware oder aber auch aus einer Recyclingware gebildet. Handelt es sich beispielsweise um Recyclingware, weist die Kunststoffschmelze einen geringen Wert an intrinsischer Viskosität aufgrund der bereits erfolgten Verarbeitung zu einem Gegenstand auf. Um den Wert der intrinsischen Viskosität der Kunststoffschmelze zu erhöhen, ist bei Polykondensaten ein Polykondensationsvorgang durchzuführen, bei welchem sich Monomere unter Abspaltung von Reaktionsprodukten, wie zum Beispiel Wasser, miteinander verknüpfen. Mit diesem Verknüpfungsprozess ist ein Kettenwachstum verbunden, wodurch sich auch die Molekülkettenlängen erhöhen, welche maßgeblich die mechanischen Eigenschaften von daraus hergestellten Produkten beeinflussen. Dieser Vorgang ist nicht nur bei der Herstellung von Neuware von Bedeutung, sondern spielt ganz besonders beim Recycling von derartigen Produkten eine wesentliche Rolle. Das zu verarbeitende Recyclingmaterial kann zunächst z.B. sortiert, zerkleinert, ggf. gereinigt, aufgeschmolzen, entgast und gefiltert werden. Diese so vorbereitete Kunststoffschmelze wird in der Anlage 1 behandelt, um diese nicht nur von ungewünschten Zusatzstoffen weiter zu reinigen sondern auch die intrinsische Viskosität auf den gewünschten Wert einzustellen. Dabei handelt es sich zumeist um eine Erhöhung der intrinsischen Viskosität, kann aber auch eine Senkung derselben beinhalten. Bei den Polykondensaten handelt es sich um Thermoplaste, wie zum Beispiel PET, PBT; PEN, PC, PA oder Werkstoffe aus Polyester oder dergleichen.

Die hier gezeigte Anlage 1 umfasst unter anderem einen Reaktor 2 mit einem vereinfacht dargestellten Reaktorgehäuse 3, welches seinerseits zumindest einen ersten Reaktorgehäuseteil 4 sowie zumindest ein unmittelbar daran anschließendes zweites Reaktorgehäuseteil 5 aufweist. Der erste Reaktorgehäuseteil 4 weist seinerseits einen oberen Endbereich 6 und einen davon distanziert angeordneten, unteren Endbereich 7 auf. Zwischen dem oberen Endbereich 6 und dem unteren Endbereich 7 erstreckt sich innerhalb des ersten Reaktorgehäuseteils 4 ein erster Kammerteil 8. Bevorzugt weist der erste Reaktorgehäuseteil 4 eine vertikale Ausrichtung zwischen seinem oberen Endbereich 6 und seinem unteren Endbereich 7 auf, wodurch auch der erste Kammerteil 8 eine vertikale Höhenerstreckung innerhalb desselben aufweist. Der erste Reaktorgehäuseteil 4 stellt somit eine in etwa turmförmige Ausbildung dar.

Der zumindest zweite Reaktorgehäuseteil 5 ist im vorliegenden Ausführungsbeispiel ebenfalls Bestandteil des Reaktorgehäuses 3 und im Bereich des unteren Endbereichs 7 des mindestens ersten Reaktorgehäuseteils 4 unmittelbar daran anschließend angeordnet. Der zweite Reaktorgehäuseteil 5 bildet bzw. umgrenzt einen zweiten Kammerteil 9. Die beiden Kammerteile 8, 9 stehen miteinander zumindest im unbefüllten Betriebszustand des Reaktors 2 in Strömungsverbindung und sind somit miteinander verbunden. Bevorzugt kann jeder der Reaktorgehäuseteile 4, 5 aus einem oder aber auch mehreren Bauteilen zusammengesetzt sein. Gleichfalls können auch unterschiedliche Längen bzw. Höhen der beiden Reaktorgehäuseteile 4, 5 gewählt werden. Um einen Zutritt von Umgebungsluft in die von den Reaktorgehäuseteilen 4, 5 umgrenzten Kammerteile 8, 9 verhindern zu können, können diese auch noch gegenüber der äußeren Umgebung abgedichtet ausgebildet sein.

Weiters ist hier noch dargestellt, dass im Bereich des oberen Endbereichs 6 des ersten Reaktorgehäuseteils 4 an zumindest einer Einlassöffnung zumindest eine Zufuhrleitung 10 für die Kunststoffschmelze in den ersten Reaktorgehäuseteil 4 einmündet. Damit kann die zu behandelnde Kunststoffschmelze in den ersten Reaktorgehäuseteil 4 zu deren Behandlung eingeleitet werden. Um die Kunststoffschmelze wieder aus dem Reaktor 2, insbesondere dessen Reaktorgehäuse 3 ableiten bzw. entnehmen zu können, ist dazu im zweiten Reaktorgehäuseteil 5 zumindest eine Auslassöffnung 11 für die Kunststoffschmelze angeordnet oder ausgebildet.

Zur weiteren Behandlung der im Reaktorgehäuse 3 befindlichen Kunststoffschmelze ist hier noch vorgesehen, dass im zweiten Reaktorgehäuseteil 5 zumindest ein darin aufgenommenes Mischelement 12 angeordnet sein kann. Das zumindest eine Mischelement 12 ist im zweiten Reaktorgehäuseteil 5 um eine Rotationsachse 13 drehbar gelagert. Dabei sei bemerkt, dass die Rotationsachse 13 nicht unbedingt eine körperliche durchgängige Achse darstellen muss, sondern auch nur eine fiktive Achse darstellen kann. Das Mischelement 12 kann unterschiedlichst ausgebildet sein. So wäre es beispielsweise möglich, mehrere scheibenförmige Elemente hintereinander zur Durchmischung der Kunststoffschmelze im zweiten Reaktorgehäuseteil 5 anzuordnen. Es wäre aber auch möglich, das Mischelement 12 durch einen oder auch mehrere helixförmige Stege oder dergleichen auszubilden. Das Mischelement 12 dient überwiegend dazu, den Schmelzespiegel bzw. die Oberfläche des Schmelzebades, welches im zweiten Kammerteil 9 des zweiten Reaktorgehäuseteiles 5 befindlich ist, in Bewegung zu halten und durch Aufreißen ständig zu erneuern. Durch diesen Behandlungsvorgang kann z.B. die im ersten Kammerteil 8 begonnene Polykondensation weiter fortgesetzt werden, wodurch eine weitere Erhöhung der intrinsischen Viskosität erzielbar ist. Das Mischelement 12 kann so ausgebildet sein, dass es nur einen Mischvorgang ohne jegliche Förderwirkung durchführt. Unabhängig davon kann aber vom Mischelement 12 auch eine gewisse Förderwirkung auf die Kunststoffschmelze ausgeübt werden, um so einen gerichteten Weitertransport zur Auslassöffnung 11 zu schaffen. Es können auch zueinander unterschiedliche Zonen hintereinander ausgebildet werden.

Die beiden Reaktorgehäuseteile 4, 5 können in ihrer Raumform unterschiedlichst ausgebildet sein, wobei bevorzugt der erste Reaktorgehäuseteil 4 und/oder der zweite Reaktorgehäuseteil 5 rohrförmig ausgebildet sein können. Unter rohrförmig wird bevorzugt ein kreisrunder Querschnitt verstanden. Eine Querschnittsabmessung kann z.B. einen Durchmesser von ca. 600 mm aufweisen. Es wären aber auch andere Querschnittsformen wie z.B. mehreckig, oval oder elliptisch denkbar. Ein Längenverhältnis der beiden Reaktorgehäuseteile 4, 5 zueinander kann basierend auf der Länge bzw. Höhe des ersten Reaktorgehäuseteils 4 zur Länge des zweiten Reaktorgehäuseteils 5 z.B. 1 : 0,5 bis 1 : 4, bevorzugt 1 : 1 bis 1 : 3, betragen.

Weiters kann im oberen Endbereich 6 des ersten Reaktorgehäuseteils 4 der über die Zufuhrleitung 10 zugeführte Schmelzestrom durch eine Lochplatte oder ein Sieb hindurchgeleitet, insbesondere mit einem auf die Schmelze einwirkenden Druck hindurchgedrückt werden, um so eine Vielzahl von dünnen Schmelzefäden zu erzeugen. Die dünnen Schmelzefäden passieren den ersten Kammerteil 8 im freien Fall. Dabei kann die Anzahl der Öffnungen bzw. Löcher an den Massedurchsatz in entsprechender Weise angepasst werden. Weiters kann durch die Höhe bzw. Länge des ersten Reaktorgehäuseteils 4 die Falldauer des Schmelzestroms bzw. der dünnen Schmelzefäden beeinflusst werden. Je höher bzw. länger der erste Reaktorgehäuseteil 4 ausgebildet wird, kann somit auch die Behandlungsdauer der Schmelze in diesem Abschnitt beeinflusst werden. Weiters kann durch die Schwerkraft auch noch ein Verdünnen der einzelnen Schmelzefäden mit einhergehen.

Der Reaktor 2, insbesondere dessen Reaktorgehäuse 3, kann in Abhängigkeit vom zu behandelnden Kunststoffmaterial auf einer entsprechenden Temperatur gehalten werden. Die dafür vorgesehenen Temperierelemente können mit den unterschiedlichsten Temperiermedien versorgt bzw. betrieben werden. So kann der Reaktor 2, insbesondere dessen Reaktorgehäuse 3, mit flüssigen und/oder gasförmigen Temperiermedien umspült sein. Es können aber auch andere Energieträger oder Energieformen, wie. z.B. elektrische Energie, eingesetzt werden

Wie bereits zuvor beschrieben, stehen die Kammerteile 8, 9 der Reaktorgehäuseteile 4, 5 miteinander in Strömungsverbindung und sind gegenüber der äußeren Umgebung abgedichtet. Des Weiteren ist es auch noch möglich, die Kammerteile 8, 9 gegenüber dem Umgebungsdruck auf einen dazu geringeren Druck abzusenken. Dazu können eine oder mehrere Anschlussöffnungen an zumindest einem der Reaktorgehäuseteile 4, 5 vorgesehen sein, welche ihrerseits über zumindest eine Absaugleitung 14 mit einem nicht näher dargestellten Unterdruckerzeuger in Strömungsverbindung stehen. Um z.B. einen gleichmäßigen, abgesenkten Druck innerhalb der Kammerteile 8, 9 zu erzielen, können auch mehrere Anschlussöffnungen vorgesehen sein, wobei diese verteilt sowohl am ersten Reaktorgehäuseteil 4 und/oder am zweiten Reaktorgehäuseteil 5 angeordnet sein können. Bevorzugt sind die Anschlussöffnungen und die damit in Verbindung stehenden Absaugleitungen 14 im Bereich des zweiten Reaktorgehäuseteils 5 an dessen Oberseite angeordnet. Die von den beiden Reaktorgehäuseteilen 4, 5 umgrenzten Kammerteile 8 können auf einen Druck kleiner 100 mbar evakuiert werden. Bevorzugt wird ein Druck zwischen 0,5 mbar und 20 mbar gewählt. Je höher der Unterdruck und damit geringer der Absolutdruck in den Kammerteilen 8, 9 ist, desto rascher und besser ist das Behandlungsergebnis der Kunststoffschmelze. Dieses Ergebnis ist auch noch von der in den Kammerteilen 8, 9 herrschenden Temperatur abhängig, welche je nach dem zu behandelnden Kunststoffwerkstoff zu wählen ist.

Weiters wäre es auch noch möglich, dass innerhalb der der ersten Reaktorgehäuseteils 4 und/oder des zweiten Reaktorgehäuseteils 5 unterschiedliche Zonen mit einem zueinander unterschiedlichen Druck, nämlich einem unterschiedlich hohem Vakuum vorzusehen. Damit kann innerhalb der Kammerteile 8, 9 ein differentielles Vakuum in zumindest einem der Reaktorgehäuseteil 4 und/oder 5 realisiert werden. Dieses differentielle Vakuum bzw. der unterschiedliche Druck kann z.B. durch differentielles Pumpen erreicht werden. Die unterschiedlichen Zonen können durch Lochblenden, Siebe, einem Zwischenboden oder aber auch Verengungen im Reaktorgehäuseteil 4, 5 oder aber auch anderer Strömungshindernisse gebildet werden.

Weiters ist es auch möglich, dass die zumindest eine Absaugleitung 14 zumindest bereichsweise mit einem Heizelement versehen bzw. umgeben ist. Das Heizelement kann beispielsweise ein mit elektrischer Energie betriebenes Heizelement sein. Es wäre aber auch möglich, die Absaugleitung 14 an deren Außenseite mit einem im Abstand bzw. Distanz dazu angeordneten Umhüllungselement zu umgeben und in dem zwischen der Absaugleitung 14 und dem Umhüllungselement ausgebildeten Zwischenraum beispielsweise ein Temperiermedium, beispielsweise eine Flüssigkeit oder ein Gas, mit entsprechender Temperatur hindurchzuleiten. Damit kann ein Kondensieren von abzusaugenden Bestandteilen aus den Kammerteilen 8, 9 in den Absaugleitungen 14 vermieden werden.

Wie bereits zuvor beschrieben, weist der erste Reaktorgehäuseteil 4 eine bevorzugt vertikale Ausrichtung auf. Der zweite Reaktorgehäuseteil 5 weist im vorliegenden Ausführungsbeispiel eine in etwa horizontal verlaufend ausgerichtete Längserstreckung mit voneinander distanziert angeordneten ersten und zweiten Endbereichen 15, 16 auf. Damit wird eine "L"-Form von beiden Reaktorgehäuseteilen 4, 5 ausgebildet. Das zumindest eine im zweiten Reaktorgehäuseteil 5 angeordnete Mischelement 12 weist bevorzugt bei einem kreisrund ausgebildeten Querschnitt des zweiten Reaktorgehäuseteils 5 eine koaxial dazu verlaufende Anordnung auf. Bei einem Rundrohr verläuft somit die Rotationsachse 13 im Zentrum des Reaktorgehäuseteils 5.

Aufgrund dieser zentrischen bzw. koaxialen Anordnung des Mischelements 12 kann dieses in einem Minimalabstand von kleiner 1,0 mm von einer Innenwand 17 des zweiten Reaktorgehäuseteils 5 angeordnet sein. Je geringer der Minimalabstand des Mischelements 12 von der Innenwand 17 gewählt wird, desto weniger an Kunststoffschmelze kann an der Innenwand 17 des zweiten Reaktorgehäuseteils 5 angelagert werden, da, je nach Ausbildung des Mischelements 12 dieses die abgelagerte Kunststoffschmelze von der Innenwand 17 zumindest bereichsweise abstreifen kann. So wäre es beispielsweise auch noch möglich, am äußeren Umfang des Mischelements 12 dieses mit einem zusätzlichen, nicht näher dargestellten Aufsatzelement zu versehen, welches dann in direktem Kontakt mit der Innenwand 17 stehen kann. Je nach Wahl und Härte des Aufsatzelements kann damit ein metallischer Kontakt zwischen dem Mischelement 12 und der Innenwand 17 des Reaktorgehäuseteils 5 vermieden werden. Des Weiteren ist auf wärmebedingte Längenänderungen zwischen dem Kaltzustand der Anlage 1 und deren Betriebszustand Bedacht zu nehmen.

Unabhängig davon wäre es aber auch möglich, das Mischelement 12 in einem Minimalabstand von größer 1,0 mm, insbesondere größer von 50 mm, insbesondere größer 150 mm von der Innenwand 17 des zweiten Reaktorgehäuseteils 5 anzuordnen. Durch die Vergrößerung des Minimalabstandes kann so ein Rückströmen und damit ein mehrfaches Umwälzen der im zweiten Kammerteil 9 befindlichen Kunststoffschmelze erzielt werden. Dadurch kann beispielsweise auch noch eine weitere Erhöhung der intrinsischen Viskosität erreicht werden. Im vorliegenden Ausführungsbeispiel erstreckt sich das Mischelement 12 über die Längserstreckung des zweiten Kammerteils 9 zwischen den voneinander distanziert angeordneten ersten und zweiten Endbereichen 15, 16 des zweiten Reaktorgehäuseteils 5. Damit ist weiters das Mischelement 12 vollständig im zweiten Kammerteil 9 angeordnet. Es erfolgt lediglich die Lagerung des Mischelements 12 beispielsweise an Endwänden des zweiten Reaktorgehäuseteils 5.

Da sich das Mischelement 12 über die innere Längserstreckung zwischen dem ersten Endbereich 15 und dem zweiten Endbereich 16 des zweiten Reaktorgehäuseteils 5 erstreckt, ist auch der Schmelzespiegel des Schmelzebades im zweiten Kammerteil 9 mit einer annähernd gleichen Längserstreckung wie das Mischelement 12 ausgebildet. Weiters kann damit so auf den Schmelzespiegel des Schmelzebades während dessen Durchmischung der gegenüber dem Umgebungsdruck abgesenkte Druck, beispielsweise von kleiner 100 mbar darauf einwirken.

Weiters ist hier noch dargestellt, dass das Mischelement 12 mit einer eigenen, unabhängigen ersten Antriebsvorrichtung 18 in Antriebsverbindung steht. Damit wird es möglich, das oder die Mischelemente 12 mit einer eigenen Rotationsgeschwindigkeit betreiben zu können, welche unabhängig von anderen Antriebsorganen gewählt werden kann. So kann je nach einzustellender und/oder zu erhöhender intrinsischer Viskosität die Durchmischung der Kunststoffschmelze, insbesondere die Intensität der Durchmischung, frei gewählt werden. Damit kann die Kunststoffschmelze im zweiten Kammerteil 9 des zweiten Reaktorgehäuseteils 5 vom Mischelement 12 ständig bewegt und durchmischt werden.

Anschließend an die im zweiten Reaktorgehäuseteil 5 angeordnete Auslassöffnung 11 ist im vorliegenden Ausführungsbeispiel eine Austragsvorrichtung 19 für die Kunststoffschmelze angeordnet. Bei dieser Austragsvorrichtung 19 kann es sich beispielsweise um eine Schmelzepumpe, einen Extruder oder ähnliches handeln. Um eine unabhängige Entnahmemenge oder ein unabhängiges Entnahmegewicht der Kunststoffschmelze aus dem zweiten Reaktorgehäuseteil 5 festlegen zu können, ist hier weiters vorgesehen, dass die Austragsvorrichtung 19 mit einer zweiten Antriebsvorrichtung 20 in Antriebsverbindung steht. Dabei kann die zweite Antriebsvorrichtung 20 unabhängig von der ersten Antriebsvorrichtung 18 des Mischelements 12 angetrieben sein. Durch diese Entkopplung der beiden Antriebsvorrichtungen 18, 20 kann eine individuellere Einstellung und Anpassung der intrinsischen Viskosität der zu behandelnden Kunststoffschmelze erzielt werden.

Die zumindest eine Auslassöffnung 11 für die Kunststoffschmelze ist hier im Bereich des vom ersten Reaktorgehäuseteil 4 distanziert angeordneten zweiten Endbereichs 16 des zweiten Reaktorgehäuseteils 5 sowie in einem Bodenbereich desselben angeordnet.

Um rasch ein Ergebnis des im Reaktor 2 durchgeführten Behandlungsergebnisses zu erhalten, ist es vorteilhaft, wenn von einer Messvorrichtung ein Messwert der intrinsischen Viskosität der behandelten Kunststoffschmelze im Bereich der Auslassöffnung 11 oder einem unmittelbar daran anschließenden Austragsabschnitt der Kunststoffschmelze ermittelt wird. Damit kann im unmittelbaren Anschluss an den Reaktor 2 eine Inlinemessung durchgeführt werden und so ohne verursachen eines hohen Ausschusses die Behandlungs- bzw. Verfahrensparameter nachjustiert bzw. eingestellt werden, um den vorgegebenen Wert der intrinsischen Viskosität zu erreichen.

Wie bereits zuvor beschrieben, ist im zweiten Reaktorgehäuseteil 5 zumindest eine Auslassöffnung 11 vorgesehen, welche im vorliegenden Ausführungsbeispiel in einem unteren Umfangsbereich des Bodenbereich des zweiten Reaktorgehäuseteils 5 angeordnet ist.

Weiters ist auch noch in der Fig. 1 vereinfacht dargestellt, dass der Reaktor 2 unter Zwischenschaltung zumindest einer Gewichtsermittlungsvorrichtung 21 an einer Aufstandsfläche, beispielsweise einem ebenen Hallenboden oder dergleichen abgestützt sein kann. Dadurch wird es möglich, das Gewicht des Reaktors 2 sowohl in seinem Leerzustand als auch im Betriebszustand mit der darin aufgenommenen und zu behandelnden Kunststoffschmelze ermitteln zu können.

Bevorzugt umfasst die Anlage 1 zumindest ein Traggerüst 22, wobei zumindest der Reaktor 2, insbesondere dessen Reaktorgehäuse 3, an dem zumindest einen Traggerüst 22 gehalten ist. Dadurch wird es in weiterer Folge möglich, dass dann das zumindest eine Traggerüst 22 mitsamt dem daran gehaltenen Reaktor 2 über mehrere der Gewichtsermittlungsvorrichtungen 21 an der Aufstandsfläche abgestützt ist. Weiters ist hier noch dargestellt, dass die zumindest eine Gewichtsermittlungsvorrichtung 21 bodennah bezüglich der Aufstandsfläche zwischen dieser und dem Traggerüst 22 angeordnet sein kann. Zusätzlich wäre es aber auch noch möglich, dass die zumindest eine Gewichtsermittlungsvorrichtung 21 an ihrer vom Reaktor 2 oder vom Traggerüst 22 abgewendeten und der Aufstandsfläche zugewendeten Seite an einem Grundrahmen 23 abgestützt ist.

Der Grundrahmen 23 kann weiters auch noch über Räder 24 an der Aufstandsfläche abgestützt sein. Damit wird es möglich, eine Ortsverlagerung des Reaktors 2 je nach Wahl und Ausbildung der Räder 24 durchführen zu können.

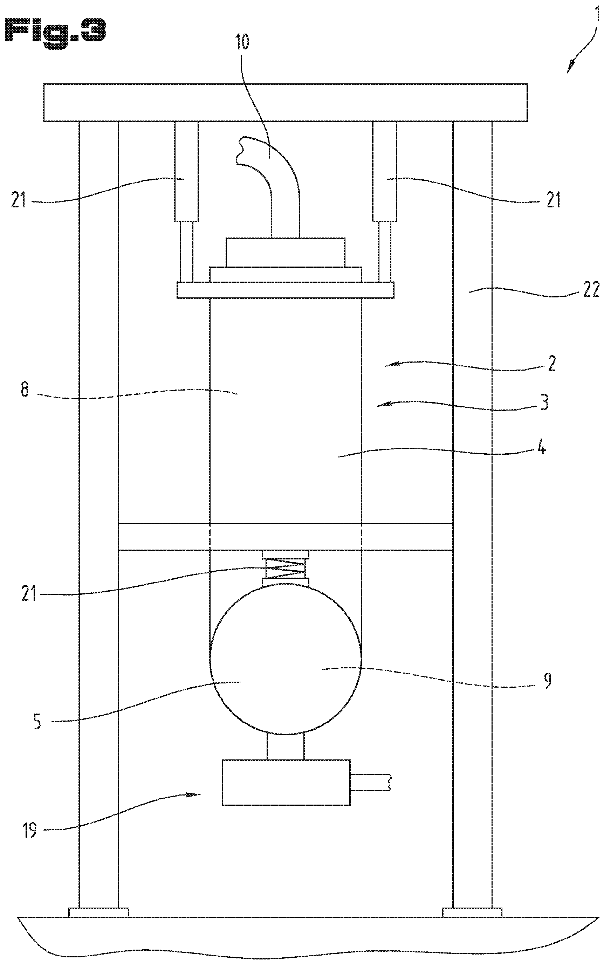

Unabhängig davon wäre es aber auch noch möglich, dass zumindest der Reaktor 2, insbesondere dessen Reaktorgehäuse 3 am Traggerüst 22 über die zumindest eine Gewichtsermittlungsvorrichtung 21 in einer hängenden Position am Traggerüst gehalten ist, wie dies aus der Fig. 3 näher dargestellt ist. Dabei sei erwähnt, dass diese Ausbildung der Abstützung für sich gegebenenfalls eine eigenständige Ausbildung darstellen kann.

Die zumindest eine Gewichtsermittlungsvorrichtung 21 kann beispielsweise durch eine Wiegezelle oder dergleichen gebildet sein. Ist der Reaktor 2, insbesondere dessen Reaktorgehäuse 3 am Traggerüst 22 in einer hängenden Position am Traggerüst 22 gehalten, kann die Gewichtsermittlungsvorrichtung 21 beispielsweise durch eine Zugwaage oder dergleichen gebildet sein. Weiters kann die zumindest eine Gewichtsermittlungsvorrichtung 21 mit einer Steuervorrichtung in Kommunikationsverbindung stehen. Damit wird es möglich, die von der oder von den Gewichtsermittlungsvorrichtungen 21 ermittelten Messwerte in der Steuervorrichtung zu verarbeiten und in weiterer Folge die für die Behandlung notwendigen Verfahrensparameter zu erstellen und an die Anlage 1 mit deren Anlagenkomponenten weiter zu leiten.

Auch die Austragsvorrichtung 19 ist unter Zwischenschaltung zumindest einer eigenen, zweiten Gewichtsermittlungsvorrichtung 21 ebenfalls an der Aufstandsfläche abgestützt. Das Abstützen kann durch direktes Abstützen oder aber auch in einer hängenden Anordnung, wie bereits zuvor für den Reaktor 2 in der Fig. 3 beschrieben, erfolgen.

Der Betrieb einer derartigen Anlage 1 kann derart erfolgen, dass in einer nicht näher dargestellten und dem Reaktor 2 vorgeschalteten Aufbereitungsvorrichtung die zu behandelnde Kunststoffschmelze gebildet oder hergestellt wird. Wird die Kunststoffschmelze aus Recycelmaterialien gebildet, sind diese bevorzugt sortenrein zu trennen, um so eine Verunreinigung zu verhindern.

Die zu behandelnde Kunststoffschmelze wird dem Reaktor 2 über die zumindest eine im oberen Endbereich 6 des ersten Reaktorgehäuseteils 4 einmündende Zufuhrleitung 10 zugeführt. Anschließend passiert die Kunststoffschmelze den vom ersten Reaktorgehäuseteil 4 umgrenzten, ersten Kammerteil 8, welcher seinerseits eine vertikale Höhenerstreckung aufweist. Die Kunststoffschmelze wird anschließend in dem am unteren Endbereich 7 des ersten Reaktorgehäuseteils 4 anschließenden und vom zweiten Reaktorgehäuseteil 5 umgrenzt zweiten Kammerteil 9 gesammelt. Dabei wird von der gesammelten Kunststoffschmelze im zweiten Kammerteil 9 ein Schmelzebad mit einem Schmelzespiegel ausgebildet. Bei einem vordefinierten Soll-Füllstand der Kunststoffschmelze kann beispielsweise der Schmelzespiegel der Kunststoffschmelze im zweiten Kammerteil 9 des zweiten Reaktorgehäuseteils 5 in etwa in halber Höhe des zweiten Kammerteils 9 liegen. Diese Höhe bzw. das Niveau kann in etwa der Lage der Rotationsachse 13 entsprechen. Zur weiteren Behandlung wird das Schmelzebad im zweiten Reaktorgehäuseteil 5 vom Mischelement 12 bewegt und durchmischt wird. Dieser Mischvorgang kann bevorzugt ständig, gegebenenfalls auch mit zueinander unterschiedlicher Intensität durchgeführt werden. Anschließend an diesen Behandlungsvorgang der Kunststoffschmelze wird die behandelte Kunststoffschmelze durch zumindest die im zweiten Reaktorgehäuseteil 5 angeordnete Auslassöffnung 11 aus dem zweiten Kammerteil 9 entnommen bzw. abgeleitet.

Wie bereits zuvor beschrieben, bildet die Kunststoffschmelze im zweiten Kammerteil 9 je nach vordefiniertem bzw. vorgegebenem Soll-Füllstand den damit verbundenen Schmelzespiegel aus. Je nach Höhe des Schmelzespiegels im zweiten Kammerteil 9 kann die Entnahme der behandelten Kunststoffschmelze aus dem zweiten Kammerteil 9 in einem Winkel von 30°, bevorzugt von 90°, bezüglich einer Längsachse des zweiten Reaktorgehäuseteils unterhalb des Schmelzespiegels durchgeführt werden. Dadurch kann der Schmelzespiegel eine annähernd gleiche Längserstreckung wie das Mischelement aufweisen, wodurch so auf den Schmelzespiegel des Schmelzebades während der Durchmischung desselben der reduzierte Druck einwirken kann. Dazu ist je nach geometrischer Ausbildung des zweiten Reaktorgehäuseteils 5 die zumindest eine Auslassöffnung 11 in einem Winkel von 30°, bevorzugt von 90°, unterhalb bezüglich einer durch die Längsachse des zweiten Reaktorgehäuseteils 5 verlaufenden Horizontalebene anzuordnen.

Um den Massen- bzw. Gewichtshaushalt an der dem Reaktor 2 zugeführten und zu behandelnden Kunststoffschmelze in vorgegebenen Grenzen zur Masse bzw. dem Gewicht der Entnahme der behandelten Kunststoffschmelze beibehalten zu können, können die zuvor beschriebenen Gewichtsermittlungsvorrichtungen 21 angewendet werden. So kann beispielsweise vor der in Inbetriebnahme der Anlage 1 von der zumindest einen Gewichtsermittlungsvorrichtung 21 ein erster Messwert vom Eigengewicht des Reaktors 2 ohne die Kunststoffschmelze ermittelt werden. Dieser Messwert kann an eine Steuervorrichtung übertragen und gegebenenfalls in dieser abgespeichert werden. Anschließend daran wird die zu behandelnde Kunststoffschmelze dem Reaktor 2 zugeführt, wobei beim Erreichen eines Soll-Füllstandes der Kunststoffschmelze im zweiten Reaktorgehäuseteil 5 und der damit verbundenen Höhe des Schmelzespiegels im zweiten Kammerteil 9 ein zweiter Messwert von der zumindest einen Gewichtsermittlungsvorrichtung 21 ermittelt wird. Dabei ist es auch wieder möglich, diesen ermittelten, zweiten Messwert an die Steuervorrichtung zu übertragen und gegebenenfalls in dieser abzuspeichern. Der erste ermittelte Messwert entspricht dabei einem Netto-Gewicht des Reaktors 2. Dann kann von der Steuervorrichtung ein Differenzwert aus dem zweiten Messwert abzüglich des ersten Messwerts ermittelt werden. Durch die Steuervorrichtung kann dann in Abhängigkeit des aus dem zweiten Reaktorgehäuseteils 5 entnommenen Gewichts an behandelter Kunststoffschmelze das Gewicht an zugeführter und zu behandelnder Kunststoffschmelze im vorgegebenen Grenzen im Gleichgewicht bezüglich des zuvor ermittelten Differenzwertes gehalten werden. Mögliche Abweichungen des Gleichgewichts von den vorgegebenen Grenzen können beispielsweise +/- 50%, bevorzugt +/- 30%, besonders bevorzugt +/-15% betragen.

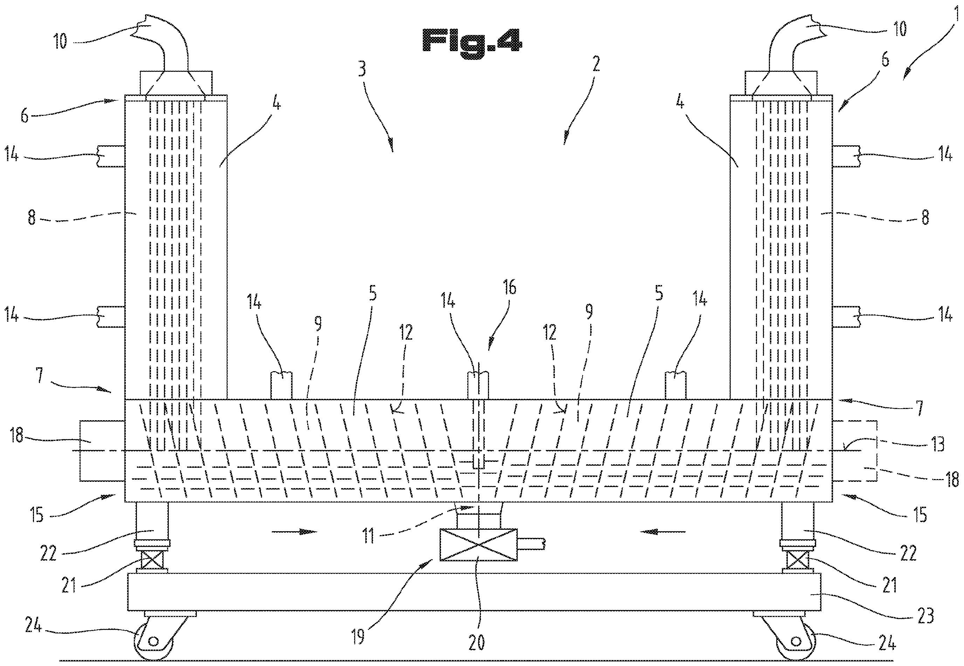

In der Fig. 4 ist eine weitere und gegebenenfalls für sich eigenständige Ausführungsform des Reaktors 2 zur Bildung der Anlage 1 gezeigt, wobei wiederum für gleiche Teile gleiche Bezugszeichen bzw. Bauteilbezeichnungen wie in den vorangegangenen Fig. 3 verwendet werden. Um unnötige Wiederholungen zu vermeiden, wird auf die detaillierte Beschreibung in den vorangegangenen Fig. 3 hingewiesen bzw. Bezug genommen. Dabei sei erwähnt, dass diese Ausbildung eine Variante zu den zuvor beschriebenen Ausführungen darstellt und lediglich eine Mehrfachanordnung von einzelnen Komponenten gewählt ist.

Das Reaktorgehäuse 3 umfasst hier jeweils zwei erste Reaktorgehäuseteile 4 und zwei zweite Reaktorgehäuseteile 5. Die beiden in etwa horizontal angeordneten Reaktorgehäuseteile 5 sind an ihren zweiten Endbereichen 16 einander zugewendet angeordnet und können dort miteinander zu einer Einheit miteinander verbunden sein. Bezüglich der beiden zweiten Endbereiche 16 erfolgt eine spiegelbildliche Anordnung der jeweiligen ersten und zweiten zusammengehörigen Reaktorgehäuseteile 4 und 5 zueinander. Bevorzugt wird an den einander zugewendeten zweiten Endbereichen 16 eine zentrale, bevorzugt gemeinsame, Auslassöffnung 11 vorgesehen.
Es wäre aber auch möglich, die zwei zweiten Reaktorgehäuseteile 5 aus einem einzigen durchgehenden Bauelement auszubilden. Weiters wäre es aber auch noch denkbar, dass die zweiten Reaktorgehäuseteile 5 aus mehreren Einzelkomponenten zusammengesetzt sind.

Innerhalb der beiden zweiten Kammerteile 9 ist auch wiederum das zumindest eine Mischelement 12 angeordnet. Um eine gerichtete Förderbewegung für die Kunststoffschmelze zu erzielen, kann bei den Mischelementen 12 eine gegenläufig aufeinander in Richtung auf die bevorzugt gemeinsame Auslassöffnung 11 ausgerichtete Steigung vorgesehen sein. Die im Betrieb in den zweiten Reaktorgehäuseteilen 5 befindliche Schmelze ist mit kurzen Strichen angedeutet, wobei unterhalb der beiden zweiten Reaktorgehäuseteile 5 die aufeinander zu gerichtete Förderbewegung derselben mit Pfeilen angedeutet ist. Es ist auch hier denkbar, in jedem der zweiten Reaktorgehäuseteile 5 ein unabhängiges Mischelement 12 vorzusehen. In diesem Fall könnte eine zentrale Lagerstelle zwischen den beiden Mischelementen 12 vorgesehen werden, wobei dann jedes der Mischelemente 12 mit einer eigenen ersten Antriebsvorrichtung 18 anzutreiben ist, wie dies im rechten Teil des Reaktors 2 mit strichlierten Linien angedeutet ist.

Es wäre aber auch möglich, die beiden Mischelemente 12 zu einem zusammengehörigen Bauteil zu verbinden oder überhaupt einstückig auszubilden. Bei dieser Ausführungsform kann dann mit einer einzigen ersten Antriebsvorrichtung 18 das Auslangen gefunden werden.

Gleichfalls ist auch hier zumindest eine Austragsvorrichtung 19 im Bereich der zumindest einen Auslassöffnung 11 vorgesehen. Bevorzugt wird eine zentrale Anordnung nur einer Auslassöffnung 11 gewählt, um so die Schmelze mittels nur einer Austragsvorrichtung 19 zu einer nachfolgenden, nicht näher dargestellten Vorrichtung zu fördern. Die Kammerteile 8, 9 können gleichfalls über Absaugleitungen 14 auf einen gegenüber dem Umgebungsdruck abgesenkten Druck evakuiert werden.

Der gesamte Reaktor 2 kann wiederum über die zuvor beschriebenen Gewichtsermittlungsvorrichtungen 21, gegebenenfalls unter Zwischenschaltung des Traggerüsts 22 an der Aufstandsfläche abgestützt sein. Das oder die Gewichtsermittlungsvorrichtungen 21 können auf der vom Reaktor 2 abgewendeten Seite an einem Grundrahmen 23 abgestützt sein. Der Grundrahmen 23 kann dann wiederum über mehrere Räder 24 an der Aufstandsfläche abgestützt sein.

Sämtliche Angaben zu Wertebereichen in gegenständlicher Beschreibung sind so zu verstehen, dass diese beliebige und alle Teilbereiche daraus mitumfassen, z.B. ist die Angabe 1 bis 10 so zu verstehen, dass sämtliche Teilbereiche, ausgehend von der unteren Grenze 1 und der oberen Grenze 10 mit umfasst sind, d.h. sämtliche Teilbereiche beginnen mit einer unteren Grenze von 1 oder größer und enden bei einer oberen Grenze von 10 oder weniger, z.B. 1 bis 1,7, oder 3,2 bis 8,1, oder 5,5 bis 10.

Der Ordnung halber sei abschließend darauf hingewiesen, dass zum besseren Verständnis des Aufbaus der Anlage 1 diese bzw. deren Bestandteile teilweise unmaßstäblich und/oder vergrößert und/oder verkleinert dargestellt wurden.

### Bezugszeichenaufstellung

- 1: Anlage
- 2: Reaktor
- 3: Reaktorgehäuse
- 4: erster Reaktorgehäuseteil
- 5: zweiter Reaktorgehäuseteil
- 6: oberer Endbereich
- 7: unterer Endbereich
- 8: erster Kammerteil
- 9: zweiter Kammerteil
- 10: Zufuhrleitung
- 11: Auslassöffnung
- 12: Mischelement
- 13: Rotationsachse
- 14: Absaugleitung
- 15: erster Endbereich
- 16: zweiter Endbereich
- 17: Innenwand
- 18: erste Antriebsvorrichtung
- 19: Austragsvorrichtung
- 20: zweite Antriebsvorrichtung
- 21: Gewichtsermittlungsvorrichtung
- 22: Traggerüst
- 23: Grundrahmen
- 24: Rad

## Patentansprüche

1. Anlage (1) zur Behandlung einer Kunststoffschmelze, insbesondere einer Polykondensatschmelze, und Einstellung von deren intrinsischen Viskosität, mit einem Reaktor (2), der ein Reaktorgehäuse (3) mit zumindest einem ersten Reaktorgehäuseteil (4) mit einem oberen Endbereich (6) und einem unteren Endbereich (7) und einen sich zwischen dem oberen und unteren Endbereich (6, 7) erstreckenden ersten Kammerteil (8) aufweist, wobei der erste Kammerteil (8) eine vertikale Höhenerstreckung aufweist, und das Reaktorgehäuse (3) im Bereich des unteren Endbereichs (7) des mindestens ersten Reaktorgehäuseteils (4) ein unmittelbar daran anschließendes, zumindest zweites Reaktorgehäuseteil (5) mit einem zweiten Kammerteil (9) aufweist, wobei die beiden Kammerteile (8, 9) miteinander in Strömungsverbindung stehen und gegenüber der äußeren Umgebung abgedichtet ausgebildet sind, und im Bereich des oberen Endbereichs (6) des ersten Reaktorgehäuseteils (4) an zumindest einer Einlassöffnung zumindest eine Zufuhrleitung (10) für die Kunststoffschmelze in den ersten Reaktorgehäuseteil (4) einmündet und im zweiten Reaktorgehäuseteil (5) zumindest eine Auslassöffnung (11) für die Kunststoffschmelze angeordnet ist, und mit zumindest einem im zweiten Reaktorgehäuseteil (5) angeordneten Mischelement (12), welches Mischelement (12) im zweiten Reaktorgehäuseteil (5) um eine Rotationsachse (13) drehbar gelagert ist, und wobei das Mischelement (12) mit einer eigenen, unabhängigen ersten Antriebsvorrichtung (18) in Antriebsverbindung steht,
**dadurch gekennzeichnet,**
- **dass** der Reaktor (2) unter Zwischenschaltung zumindest einer ersten Gewichtsermittlungsvorrichtung (21) an einer Aufstandsfläche abgestützt ist,
- **dass** anschließend an die Auslassöffnung (11) des zweiten Reaktorgehäuseteils (5) eine als Schmelzepumpe oder als Extruder ausgebildete Austragsvorrichtung (19) für die Kunststoffschmelze angeordnet ist,
- **dass** auch die Austragsvorrichtung (19) unter Zwischenschaltung zumindest einer eigenen zweiten Gewichtsermittlungsvorrichtung (21) an der Aufstandsfläche abgestützt ist, und
- **dass** die Austragsvorrichtung (19) mit einer zweiten Antriebsvorrichtung (20) in Antriebsverbindung steht, wobei die zweite Antriebsvorrichtung (20) unabhängig von der ersten Antriebsvorrichtung (18) des Mischelements (12) angetrieben ist.

2. Anlage (1) nach Anspruch 1, **dadurch gekennzeichnet, dass** diese weiters zumindest ein Traggerüst (22) umfasst und zumindest der Reaktor (2), insbesondere dessen Reaktorgehäuse (3), an dem zumindest einen Traggerüst (22) gehalten ist.

3. Anlage (1) nach Anspruch 2, **dadurch gekennzeichnet, dass** das Traggerüst (22) mitsamt dem daran gehaltenen Reaktor (2) über mehrere der Gewichtsermittlungsvorrichtungen (21) an der Aufstandsfläche abgestützt ist.

4. Anlage (1) nach einem der vorhergehenden Ansprüche, **dadurch gekennzeichnet, dass** die zumindest eine Gewichtsermittlungsvorrichtung (21) an ihrer vom Reaktor (2) oder vom Traggerüst (22) abgewendeten und der Aufstandsfläche zugewendeten Seite an einem Grundrahmen (23) abgestützt ist und der Grundrahmen (23) über Räder (24) an der Aufstandsfläche abgestützt ist.

5. Anlage (1) nach Anspruch 1 oder 2, **dadurch gekennzeichnet, dass** zumindest der Reaktor (2), insbesondere dessen Reaktorgehäuse (3), am Traggerüst (22) über die zumindest eine Gewichtsermittlungsvorrichtung (21) in einer hängenden Position am Traggerüst (22) gehalten ist.

6. Anlage (1) nach einem der vorhergehenden Ansprüche, **dadurch gekennzeichnet, dass** die zumindest eine Gewichtsermittlungsvorrichtung (21) durch eine Wiegezelle oder eine Zugwaage gebildet ist, wobei die zumindest eine Gewichtsermittlungsvorrichtung (21) mit einer Steuervorrichtung in Kommunikationsverbindung steht.

7. Anlage (1) nach einem der vorhergehenden Ansprüche, **dadurch gekennzeichnet, dass** der erste Reaktorgehäuseteil (4) und/oder der zweite Reaktorgehäuseteil (5) rohrförmig ausgebildet ist bzw. sind.

8. Anlage (1) nach einem der vorhergehenden Ansprüche, **dadurch gekennzeichnet, dass** die Rotationsachse (13) des Mischelements (12) koaxial bezüglich des rohrförmig ausgebildeten zweiten Reaktorgehäuseteils (5) angeordnet ist.

9. Anlage (1) nach einem der Ansprüche 7 oder 8, **dadurch gekennzeichnet, dass** das Mischelement (12) in einem Minimalabstand von kleiner 1,0 mm von einer Innenwand (17) des zweiten Reaktorgehäuseteils (5) angeordnet ist oder dass das Mischelement (12) in einem Minimalabstand von größer 1,0 mm, insbesondere größer 20 mm, von der Innenwand (17) des zweiten Reaktorgehäuseteils angeordnet ist.

10. Anlage (1) nach einem der vorhergehenden Ansprüche, **dadurch gekennzeichnet, dass** beide miteinander in Strömungsverbindung stehenden Kammerteile (8, 9) der beiden Reaktorgehäuseteile (4, 5) über zumindest eine Anschlussöffhung und zumindest eine Absaugleitung (14) mit einem Unterdruckerzeuger in Strömungsverbindung stehen und dass die zumindest eine Absaugleitung (14) zumindest bereichsweise mit einem Heizelement versehen ist.

11. Anlage (1) nach einem der vorhergehenden Ansprüche, **dadurch gekennzeichnet, dass** die zumindest eine Auslassöffnung (11) für die Kunststoffschmelze im Bereich des vom ersten Reaktorgehäuseteil (4) distanziert angeordneten zweiten Endbereichs (16) des zweiten Reaktorgehäuseteils (5) sowie in einem Bodenbereich desselben angeordnet ist.

12. Verfahren zur Behandlung einer Kunststoffschmelze, insbesondere einer Polykondensatschmelze, und Einstellung von deren intrinsischen Viskosität, bei dem die zu behandelnde Kunststoffschmelze einem Reaktor (2) mit einem Reaktorgehäuse (3), umfassend zumindest ein erstes und zumindest ein zweites Reaktorgehäuseteil (5), über zumindest eine in einem oberen Endbereich (6) des ersten Reaktorgehäuseteils (4) einmündende Zufuhrleitung (10) zugeführt wird, anschließend die Kunststoffschmelze einen vom ersten Reaktorgehäuseteil (4) umgrenzten ersten Kammerteil (8) mit einer vertikalen Höhenerstreckung passiert, die Kunststoffschmelze in einer an einem unteren Endbereich (7) des ersten Reaktorgehäuseteils (4) anschließenden und vom zweiten Reaktorgehäuseteil (5) umgrenzten zweiten Kammerteil (9) gesammelt wird und dabei von der gesammelten Kunststoffschmelze im zweiten Kammerteil (9) ein Schmelzebad mit einem Schmelzespiegel ausgebildet wird, das Schmelzebad im zweiten Reaktorgehäuseteil (5) von einem Mischelement (12) bewegt und durchmischt wird, wobei das Mischelement (12) von einer eigenen, unabhängigen ersten Antriebsvorrichtung (18) angetrieben wird, und wobei die behandelte Kunststoffschmelze durch zumindest eine im zweiten Reaktorgehäuseteil (5) angeordnete Auslassöffnung (11) aus dem zweiten Kammerteil (9) entnommen wird,
**dadurch gekennzeichnet,**
- **dass** zuerst von zumindest einer ersten Gewichtsermittlungsvorrichtung (21) vom Eigengewicht des Reaktors (2) und von zumindest einer eigenen zweiten Gewichtsermittlungsvorrichtung (21) vom Eigengewicht von einer anschließend an die im zweiten Reaktorgehäuseteil (5) angeordneten Auslassöffnung (11) angeordneten, als Schmelzepumpe oder als Extruder ausgebildeten Austragsvorrichtung (19) ohne der Kunststoffschmelze jeweils ein erster Messwert ermittelt und an eine Steuervorrichtung übertragen und gegebenenfalls in dieser abgespeichert werden,
- **dass** anschließend die zu behandelnde Kunststoffschmelze dem Reaktor (2) zugeführt und bei Erreichen eines Sollfüllstandes der Kunststoffschmelze und der damit verbundenen Höhe des Schmelzespiegels im zweiten Kammerteil (9) des zweiten Reaktorgehäuseteils (5) von der zumindest einen ersten und von der zumindest einen eigenen zweiten Gewichtsermittlungsvorrichtung (21) jeweils zweite Messwerte ermittelt und an die Steuervorrichtung übertragen und gegebenenfalls in dieser abgespeichert werden,
- **dass** dann von der Steuervorrichtung ein Differenzwert aus den zweiten Messwerten abzüglich der ersten Messwerte ermittelt wird,
- **dass** von der Steuervorrichtung in Abhängigkeit des aus dem zweiten Reaktorgehäuseteils (5) entnommenen Gewichts an behandelter Kunststoffschmelze das Gewicht an zugeführter, zu behandelnder Kunststoffschmelze in vorgegebenen Grenzen im Gleichgewicht bezüglich des zuvor ermittelten Differenzwertes gehalten wird,
- **dass** die anschließend an die im zweiten Reaktorgehäuseteil (5) angeordnete Auslassöffnung (11) angeordnete Austragsvorrichtung (19) von einer zweiten Antriebsvorrichtung (20) angetrieben wird, und
- **dass** die zweite Antriebsvorrichtung (20) unabhängig von der ersten Antriebsvorrichtung (18) des Mischelements (12) angetrieben wird.

13. Verfahren nach Anspruch 12, **dadurch gekennzeichnet, dass** die dem Reaktor (2) zugeführte und zu behandelnde Kunststoffschmelze im ersten Reaktorgehäuseteil (4) in eine Vielzahl von dünnen Schmelzefäden aufgeteilt wird und die dünnen Schmelzefäden den ersten Kammerteil (8) im freien Fall passieren.

14. Verfahren nach einem der Ansprüche 12 oder 13, **dadurch gekennzeichnet, dass** die Kunststoffschmelze im zweiten Kammerteil (9) des zweiten Reaktorgehäuseteils (5) vom Mischelement (12) ständig bewegt und durchmischt wird.

15. Verfahren nach einem der Ansprüche 12 bis 14, **dadurch gekennzeichnet, dass** die von den beiden Reaktorgehäuseteilen (4, 5) umgrenzten Kammerteile (8,9) auf einen Druck kleiner 100 mbar evakuiert werden.

16. Verfahren nach Anspruch 15, **dadurch gekennzeichnet, dass** der Schmelzespiegel des Schmelzebades im zweiten Kammerteil (9) mit einer annähernd gleichen Längserstreckung wie das Mischelement (12) ausgebildet wird und so auf den Schmelzespiegel des Schmelzebades während dessen Durchmischung der Druck kleiner 100 mbar einwirkt.

17. Verfahren nach einem der Ansprüche 12 bis 16, **dadurch gekennzeichnet, dass** die Entnahme der behandelten Kunststoffschmelze aus dem zweiten Kammerteil (9) in einem Winkel von 30°, bevorzugt von 90°, bezüglich einer Längsachse des zweiten Reaktorgehäuseteils (5) unterhalb des Schmelzespiegels durchgeführt wird.

18. Verfahren nach einem der Ansprüche 12 bis 17, **dadurch gekennzeichnet, dass** von einer Messvorrichtung ein Messwert der intrinsischen Viskosität der behandelten Kunststoffschmelze im Bereich der Auslassöffnung (11) oder einem unmittelbar daran anschließenden Austragsabschnitt der Kunststoffschmelze ermittelt wird.

## Claims

1. An installation (1) for treating a plastics melt, in particular a polycondensate melt, and setting the intrinsic viscosity thereof, having a reactor (2) which has a reactor housing (3) with at least one first reactor housing part (4) with an upper end region (6) and a lower end region (7) and which has a chamber part (8) extending between the upper and lower end regions (6, 7), wherein the first chamber part (8) has a vertical height extent, and the reactor housing (3) has, in the region of the lower end region (7) of the at least first reactor housing part (4), an at least second reactor housing part (5) which directly adjoins said first reactor housing part (4) and which has a second chamber part (9), wherein the two chamber parts (8, 9) are connected to one another in terms of flow and are formed so as to be sealed off with respect to the external surroundings, and in the region of the upper end region (6) of the first reactor housing part (4) at least one feed line (10) for the plastics melt opens into the first reactor housing part (4) at at least one inlet opening, and at least one outlet opening (11) for the plastics melt is arranged in the second reactor housing part (5), and having at least one mixing element (12) which is arranged in the second reactor housing part (5), which mixing element (12) is mounted in the second reactor housing part (5) so as to be rotatable about an axis of rotation (13), and wherein the mixing element (12) is connected in terms of drive to a separate, independent first drive device (18),
**characterized in,**
- **that** the reactor (2) is supported on a standing surface with the interposition of at least one first weight-determining device (21),
- **that** a discharge device (19) for the plastics melt is arranged so as to adjoin the outlet opening (11) of the second reactor housing part (5), which discharge device (19) is in the form of a melt pump or in the form of an extruder,
- **that** the discharge device (19) is also supported on the standing surface with the interposition of at least one separate second weight-determining device (21), and
- **that** the discharge device (19) is connected in terms of drive to a second drive device (20), wherein the second drive device (20) is driven independently of the first drive device (18) of the mixing element (12).

2. The installation (1) according to claim 1, **characterized in that** said installation (1) furthermore comprises at least one support frame (22), and at least the reactor (2), in particular the reactor housing (3) thereof, is held on the at least one support frame (22).

3. The installation (1) according to in claim 2, **characterized in that** the support frame (22) together with the reactor (2) held thereon is supported on the standing surface via several of the weight-determining devices (21).

4. The installation (1) according to any one of the preceding claims, **characterized in that** the at least one weight-determining device (21) is, at its side averted from the reactor (2) or from the support frame (22) and facing toward the standing surface, supported on a base frame (23), and the base frame (23) is supported on the standing surface via wheels (24).

5. The installation (1) according to claim 1 or 2, **characterized in that** at least the reactor (2), in particular the reactor housing (3) thereof, is held on the support frame (22), in a suspended position on the support frame (22), via the at least one weight-determining device (21).

6. The installation (1) according to any one of the preceding claims, **characterized in that** the at least one weight-determining device (21) is formed by a weighing cell or a set of tension scales, wherein the at least one weight-determining device (21) has a communication connection to a control device.

7. The installation (1) according to any one of the preceding claims, **characterized in that** the first reactor housing part (4) and/or the second reactor housing part (5) are/is of tubular form.

8. The installation (1) according to any one of the preceding claims, **characterized in that** the axis of rotation (13) of the mixing element (12) is arranged coaxially with respect to the second reactor housing part (5) of tubular form.

9. The installation (1) according to one of the claims 7 or 8, **characterized in that** the mixing element (12) is arranged at a minimum spacing of smaller than 1.0 mm from an inner wall (17) of the second reactor housing part (5) or that the mixing element (12) is arranged at a minimum distance of greater than 1.0 mm, in particular, greater than 20 mm from the inner wall (17) of the second reactor housing part.

10. The installation (1) according to any one of the preceding claims, **characterized in that** the two chamber parts (8, 9), which are connected to one another in terms of flow, of the two reactor housing parts (4, 5) are connected in terms of flow to a negative-pressure generator via at least one port opening and at least one suction-extraction line (14) and that the at least one suction-extraction line (14) is provided with a heating element at least in regions.

11. The installation (1) according to any one of the preceding claims, **characterized in that** the at least one outlet opening (11) for the plastics melt is arranged in the region of the second end region (16) of the second reactor housing part (5) and in a base region of the latter, said second end region (16) being arranged at a distance from the first reactor housing part (4).

12. A method for treating a plastics melt, in particular a polycondensate melt, and setting the intrinsic viscosity thereof, in which method the plastics melt to be treated is fed to a reactor (2) which has a reactor housing (3), comprising at least one first and at least one second reactor housing part (5), via at least one feed line (10) which opens into an upper end region (6) of the first reactor housing part (4), the plastics melt subsequently passes through a first chamber part (8) which is enclosed by the first reactor housing part (4) and which has a vertical height extent, the plastics melt is collected in a second chamber part (9) which adjoins a lower end region (7) of the first reactor housing part (4) and which is enclosed by the second reactor housing part (5), and, in the process, a melt bath with a melt surface is formed by the collected plastics melt in the second chamber part (9), the melt bath is moved and mixed in the second reactor housing part (5) by a mixing element (12), wherein the mixing element (12) is driven by a separate, independent first drive device (18), and wherein the treated plastics melt is extracted from the second chamber part (9) through at least one outlet opening (11) arranged in the second reactor housing part (5),
**characterized in,**
- **that** a first measurement value of the weight of the reactor (2) is determined by at least one first weight-determining device (21) and a first measurement value of a discharge device (19) designed as a melt pump or as an extruder then arranged on the outlet opening (11) arranged in the second reactor housing part (5) is determined by at least a designated second weight-determining device (21) without the plastic melt respectively and transmitted to a control device and possibly stored in this,
- **that** then, the plastic melt to be treated is fed to the reactor (2) and upon reaching a setpoint level of the plastics melt, and the associated level of the melt surface in the second chamber part (9) of the second reactor housing part (5), second measurement values are determined by the at least first and the at least second designated weight-determining device (21) and transmitted to the control device and possibly sored in this,
- **that** then, by means of the control device, a differential value is determined from the second measurement value minus the first measurement values,
- **that** by means of the control device, in a manner dependent on the weight of treated plastics melt extracted from the second reactor housing part (5), the weight of fed plastics melt to be treated is, within predefined limits, kept in equilibrium with respect to the previously determined differential value,
- **that** the discharge device (19) which is arranged so as to adjoin the outlet opening (11) arranged in the second reactor housing part (5) is driven by a second drive device (20), and
- **that** the second drive device (20) is driven independently of the first drive device (18) of the mixing element (12).

13. The method according to claim 12, **characterized in that** the plastics melt to be treated which is fed to the reactor (2) is split up into a multiplicity of thin melt filaments in the first reactor housing part (4), and the thin melt filaments pass in a free-falling manner through the first chamber part (8).

14. The method according to one of the claims 12 or 13, **characterized in that** the plastics melt in the second chamber part (9) of the second reactor housing part (5) is moved and mixed constantly by the mixing element (12).

15. The method according to one of the claims 12 to 14, **characterized in that** the chamber parts (8, 9) enclosed by the two reactor housing parts (4, 5) are evacuated to a pressure of lower than 100 mbar.

16. The method according to claim 15, **characterized in that** the melt surface of the melt bath in the second chamber part (9) is formed with a length extent approximately equal to that of the mixing element (12), and thus the pressure of lower than 100 mbar acts on the melt surface of the melt bath during the mixing thereof.

17. The method according to one of the claims 12 to 16, **characterized in that** the extraction of the treated plastics melt from the second chamber part (9) is performed below the melt surface at an angle of 30°, preferably 90°, with respect to a longitudinal axis of the second reactor housing part (5).

18. The method according to one of the claims 12 to 17, **characterized in that**, by means of a measurement device, a measurement value of the intrinsic viscosity of the treated plastics melt is determined in the region of the outlet opening (11) or in a discharge section, directly adjoining said region, of the plastics melt.

## Revendications

1. Installation (1) pour le traitement d'une coulée de matière plastique, plus particulièrement d'une coulée de polycondensat, et le réglage de sa viscosité intrinsèque, avec un réacteur (2) qui comprend un boîtier de réacteur (3) avec au moins une première partie de boîtier de réacteur (4) avec une zone d'extrémité supérieure (6) et une zone d'extrémité inférieure (7) et une première partie de chambre (8) s'étendant entre les zones d'extrémité supérieure et inférieure (6, 7), la première partie de chambre (8) présentant une extension en hauteur verticale et le boîtier de réacteur (3) comprenant, au niveau de la zone d'extrémité inférieure (7) de l'au moins une première partie de boîtier de réacteur (4), au moins une deuxième partie de boîtier de réacteur (5), avec une deuxième partie de chambre (9), raccordé immédiatement à celle-ci, les deux parties de chambre (8, 9) étant reliées de manière à permettre un écoulement entre elles et étant conçues de manière étanche par rapport à l'environnement extérieur et, au niveau de la zone d'extrémité supérieure (6) de la première partie de boîtier de réacteur (4) et au niveau d'au moins une ouverture d'entrée, au moins une conduite d'alimentation (10) pour la coulée de matière plastique débouche dans la première partie de boîtier de réacteur (4) et, dans la deuxième partie de boîtier de réacteur (5), est disposée au moins une ouverture de sortie (11) pour la coulée de matière plastique, et avec au moins un élément de mélange (12) disposé dans la deuxième partie de boîtier de réacteur (5), cet élément de mélange (12) étant logé de manière rotative autour d'un axe de rotation (13) dans la deuxième partie de boîtier de réacteur (5), et l'élément de mélange (12) étant relié en entraînement avec son propre dispositif d'entraînement (18) indépendant, **caractérisée en ce que**
- le réacteur (2) est appuyé contre une surface de support en intercalant au moins un premier dispositif propre de détermination de poids (21),
- après l'ouverture de sortie (11) de la deuxième partie de boîtier de réacteur (5), est disposé un dispositif d'évacuation (19) pour la coulée de matière plastique, conçu comme une pompe à coulée ou une extrudeuse,
- le dispositif d'évacuation (19) est appuyé contre la surface de support en intercalant au moins un deuxième dispositif de détermination de poids (21) et
- le dispositif d'évacuation (19) est en liaison d'entraînement avec un deuxième dispositif d'entraînement (20), le deuxième dispositif d'entraînement (20) étant entraîné indépendamment du premier dispositif d'entraînement (18) de l'élément de mélange (12).

2. Installation (1) selon la revendication 1, **caractérisée en ce que** celle-ci comprend en outre au moins un châssis de support (22) et au moins le réacteur (2), plus particulièrement son boîtier de réacteur (3), est maintenu sur l'au moins un châssis de support (22).

3. Installation (1) selon la revendication 2, **caractérisée en ce que** le châssis de support (22) est appuyé contre la surface de support conjointement avec le réacteur (2) qui y est maintenu par l'intermédiaire de plusieurs des dispositifs de détermination du poids (21).

4. Installation (1) selon l'une des revendications précédentes, **caractérisée en ce que** l'au moins un dispositif de détermination de poids (21) est appuyé, sur con côté opposé au réacteur (2) ou au châssis de support (22) et orienté vers la surface de support au niveau d'un châssis de base (23) et le châssis de base (23) est appuyé contre la surface de support par l'intermédiaire de roues (24).

5. Installation (1) selon la revendication 1 ou 2, **caractérisée en ce qu'**au moins le réacteur (2), plus particulièrement son boîtier de réacteur (3) est maintenu sur le châssis de support (22) par l'intermédiaire de l'au moins un dispositif de détermination de poids (21) dans une position suspendue sur le châssis de support (22).

6. Installation (1) selon l'une des revendications précédentes, **caractérisée en ce que** l'au moins un dispositif de détermination de poids (21) est constitué d'une cellule de pesée ou d'une balance à suspension, l'au moins un dispositif de détermination de poids (21) étant relié en communication avec un dispositif de commande.

7. Installation (1) selon l'une des revendications précédentes, **caractérisée en ce que** la première partie de boîtier de réacteur (4) et/ou la deuxième partie de boîtier de réacteur (5) présente(nt) une forme tubulaire.

8. Installation (1) selon l'une des revendications précédentes, **caractérisée en ce que** l'axe de rotation (13) de l'élément de mélange (12) est disposé de manière coaxiale par rapport à la deuxième partie de boîtier de réacteur (5) de forme tubulaire.

9. Installation (1) selon l'une des revendications 7 ou 8, **caractérisée en ce que** l'élément de mélange (12) est disposé à une distance minimale inférieure à 1,0 mm d'une paroi interne (17) de la deuxième partie de boîtier de réacteur (5) ou **en ce que** l'élément de mélange (12) est disposé à une distance minimale supérieure à 1,0 mm, plus particulièrement supérieure à 20 mm, de la paroi interne (17) de la deuxième partie de boîtier de réacteur.

10. Installation (1) selon l'une des revendications précédentes, **caractérisée en ce que** les deux parties de chambre (8, 9), reliées entre elles en écoulement, des deux parties de boîtier de réacteur (4, 5) sont reliées en écoulement, par l'intermédiaire d'au moins une ouverture de raccordement et d'au moins une conduite d'aspiration (14), avec un générateur de dépression et **en ce que** l'au moins une conduite d'aspiration (14) est munie, au moins à certains endroits, d'un élément chauffant.

11. Installation (1) selon l'une des revendications précédentes, **caractérisée en ce que** l'au moins une ouverture de sortie (11) pour la coulée de matière plastique est disposée au niveau de la deuxième zone d'extrémité (16) de la deuxième partie de boîtier de réacteur (5), disposée à distance de la première partie de boîtier de réacteur (4), ainsi que dans une zone de fond de celle-ci.

12. Procédé de traitement d'une coulée de matière plastique, plus particulièrement d'une coulée de polycondensat et le réglage de sa viscosité intrinsèque, dans lequel la coulée de matière plastique à traiter est introduite dans un réacteur (2) avec un boîtier de réacteur (3), comprenant au moins une première et au moins une deuxième parties de boîtier de réacteur (5), par l'intermédiaire d'au moins une conduite d'alimentation (10) débouchant dans une zone d'extrémité supérieure (6) de la première partie de boîtier de réacteur (4), puis la coulée de matière plastique passe dans une première partie de chambre (8), délimitée par la première partie de boîtier de réacteur (4), avec une extension en hauteur verticale, la coulée de matière plastique est collectée dans une deuxième partie de chambre (9) se raccordant à une zone d'extrémité inférieure (7) de la première partie de boîtier de réacteur (4) et délimitée par la deuxième partie de boîtier de réacteur (5) et la coulée de matière plastique collectée formant, dans la deuxième partie de chambre (9), un bain de coulée avec un niveau de coulée, le bain de coulée est déplacé et mélangé dans la deuxième partie de boîtier de réacteur (5) par un élément de mélange (12), l'élément de mélange (12) étant entraîné par son propre premier dispositif d'entraînement (18) indépendant et la coulée de matière plastique traitée étant retirée hors de la deuxième partie de chambre (9) à travers au moins une ouverture de sortie (11) disposée dans la deuxième partie de boîtier de réacteur (5),
**caractérisé en ce que**
- d'abord des premières valeurs de mesure sont déterminées chacune par au moins un premier dispositif de détermination de poids (21), à partir du poids propre du réacteur (2) et par au moins un deuxième dispositif propre de détermination de poids (21), à partir du poids propre d'un dispositif d'évacuation (19) disposé après l'ouverture de sortie (11) disposée dans la deuxième partie de boîtier de réacteur (5) et conçu comme une pompe de coulée ou comme une extrudeuse, sans la coulée de matière plastique, et transmises à un dispositif de commande et le cas échéant enregistrées dans celui-ci,
- la coulée de matière plastique à traiter est ensuite introduite dans le réacteur (2) et lorsqu'un niveau de remplissage de consigne de la coulée de matière plastique est atteint, et la hauteur du niveau de coulée dans la deuxième partie de chambre (9) de la deuxième partie de boîtier de réacteur (5), qui y est associée, des deuxièmes valeurs de mesure sont déterminées par l'au moins un premier et l'au moins un deuxième dispositif propre de détermination de poids (21) et transmise au dispositif de commande et, le cas échéant, enregistrées dans celui-ci,
- une valeur de différence est ensuite déterminée par le dispositif de commande à partir des deuxièmes valeurs de mesure moins les premières valeurs de mesure,
- le dispositif de commande maintient, en fonction du poids de la coulée de la matière plastique traitée retirée de la deuxième partie de boîtier de réacteur (5), le poids de coulée de matière plastique introduite à traiter dans des limites prédéterminées en équilibre par rapport à la valeur de différence déterminée précédemment,
- le dispositif d'évacuation (19) disposé après l'ouverture de sortie (11) disposée dans la deuxième partie de boîtier de réacteur (5) est entraîné par un deuxième dispositif d'entraînement (20) et
- le deuxième dispositif d'entraînement (20) est entraîné indépendamment du premier dispositif d'entraînement (18) de l'élément de mélange (12).

13. Procédé selon la revendication 12, **caractérisé en ce que** la coulée de matière plastique introduite dans le réacteur (2) et à traiter est divisée, dans la première partie de boîtier de réacteur (4), en une pluralité de minces fils de coulée et les minces fils de coulée traversent la première partie de chambre (8) en chute libre.

14. Procédé selon l'une des revendications 12 ou 13, **caractérisé en ce que** la coulée de matière plastique est constamment déplacée et mélangée dans la deuxième partie de chambre (9) de la deuxième partie de boîtier de réacteur (5) par l'élément de mélange (12).

15. Procédé selon l'une des revendications 12 à 14, **caractérisé en ce que** les parties de chambre (8, 9) délimitées par les deux parties de boîtier de réacteur (4, 5) sont évacuées à une pression inférieure à 100 mbar.

16. Procédé selon la revendication 15, **caractérisé en ce que** le niveau de coulée du bain de coulée dans la deuxième partie de chambre (9) est formé avec une extension longitudinale approximativement également à celle de l'élément de mélange (12) et la pression inférieure à 100 mbar agit donc sur le niveau de coulée du bain de coulée pendant son mélange.

17. Procédé selon l'une des revendications 12 à 16, **caractérisé en ce que** le retrait de la coulée de matière plastique traitée hors de la deuxième partie de chambre (9) est effectué avec un angle de 30°, de préférence de 90°, par rapport à un axe longitudinal de la deuxième partie de boîtier de réacteur (5) en dessous du niveau de coulée.

18. Procédé selon l'une des revendications 12 à 17, **caractérisé en ce qu'**une valeur de mesure de la viscosité intrinsèque de la coulée de matière plastique traitée est déterminée par un dispositif de mesure au niveau de l'ouverture de sortie (11) ou dans une portion d'évacuation de la coulée de matière plastique qui lui succède immédiatement.
